(19) Europäisches Patentamt / European Patent Office / Office européen des brevets

(11) **EP 4 100 196 B1**

(12) **EUROPEAN PATENT SPECIFICATION**

(45) Date of publication and mention
of the grant of the patent:
**18.12.2024   Bulletin 2024/51**

(21) Application number: **21710404.1**

(22) Date of filing: **02.02.2021**

(51) International Patent Classification (IPC):
**B23K 26/00** (2014.01)      **B23K 26/03** (2006.01)
**B23K 26/08** (2014.01)      **B23K 26/352** (2014.01)
**B23K 26/362** (2014.01)      **B23K 26/40** (2014.01)

(52) Cooperative Patent Classification (CPC):
**B23K 26/0006; B23K 26/03; B23K 26/08;
B23K 26/355; B23K 26/362; B23K 26/40**

(86) International application number:
**PCT/EP2021/052435**

(87) International publication number:
**WO 2021/156256 (12.08.2021 Gazette 2021/32)**

(54) **LASER MARKING SYSTEM AND METHOD OF MANUFACTURING A LASER MARKING SYSTEM**

LASERMARKIERUNGSSYSTEM UND VERFAHREN ZUR HERSTELLUNG EINES
LASERMARKIERUNGSSYSTEMS

SYSTÈME DE MARQUAGE LASER ET PROCÉDÉ DE FABRICATION D'UN SYSTÈME DE
MARQUAGE LASER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **03.02.2020   US 202062969273 P**

(43) Date of publication of application:
**14.12.2022   Bulletin 2022/50**

(73) Proprietor: **ALLTEC ANGEWANDTE LASERLICHT
TECHNOLOGIE GMBH
23923 Selmsdorf (DE)**

(72) Inventor: **RYAN, Daniel J.
Sycamore, Illinois 60178 (US)**

(74) Representative: **Marks & Clerk LLP
15 Fetter Lane
London EC4A 1BW (GB)**

(56) References cited:
WO-A1-2019/101887      CN-A- 106 300 002
CN-A- 109 143 460      US-A- 4 696 062
US-A- 5 684 642      US-A- 5 815 626
US-B1- 6 614 967

EP 4 100 196 B1

## Description

TECHNICAL FIELD

The present invention relates to a laser marking system, a method for marking a target, a method of designing the laser marking system and a method of manufacturing a laser marking system, see respectively claims 1, 13, 14 and 15. The laser marking system comprises a laser configured to produce a laser beam, a marking head configured to project the laser beam onto a target, and a negative curvature hollow core fiber configured to transmit the laser beam from the laser to the marking head. Aspects and implementations of the present disclosure are directed generally to laser marking equipment.

BACKGROUND

Current laser markers and scanners are limited during automated production operations in packaging as well as in parts marking production lines. Current laser markers and scanners are typically fixed into production systems relative to articles being marked.

WO2019101887 discloses an electromagnetic radiation steering mechanism configured to steer electromagnetic radiation to address a specific location within a two-dimensional field of view comprising a first optical element having an associated first actuator configured to rotate the first optical element about a first rotational axis to change a first coordinate of a first steering axis in the two-dimensional field of view, a second optical element having an associated second actuator configured to rotate the second optical element about a second rotational axis to change a second coordinate of a second steering axis in the two-dimensional field of view, and an electromagnetic radiation manipulator optically disposed between the first and second optical elements. A first angle is defined between the first and second rotational axes and a second angle is defined between the first and second steering axes. The electromagnetic radiation manipulator is configured to introduce a difference between the first angle and the second angle.

It is in object of the present invention to provide a laser marking system that obviates or mitigates one or more problems of the prior art whether identified herein or elsewhere.

SUMMARY

Fiber optics has long been the preferred form of beam delivery for fiber lasers, semiconductor lasers, and laser diodes. The fiber technology and materials are well suited for high power and high-quality beam delivery for applications ranging from cutting and welding to high precision marking and coding. The use of fibers has not reached $CO_2$ laser applications. The use of fiber delivery of $CO_2$ laser beams has been limited to low power and low beam-quality applications such as found in medical and low-end material processing. A laser marking system, a method of marking a target using the laser marking system, a method of designing the laser marking system and a method of manufacturing a laser marking system according to the present invention are defined in claims 1, 13, 14 and 15 respectively.

Use of fibers in other types of laser, such as lasers configured to provide ultraviolet radiation or near infrared radiation, may also be limited to certain applications due to having a limited transmission quality. Solid-state lasers comprising, for example, Nd:YAG (neodymium doped yttrium aluminum garnet, i.e. a YAG laser) or $Nd:VO_4$ (neodymium doped yttrium orthovanadate, i.e. a vanadate laser) crystals may be used to produce near infrared light for marking and/or coding. These solid-state lasers typically emit light having a wavelength of about 1.06 $\mu$m.

Ultraviolet light may be produced by applying a non-linear optical process to the near infrared light discussed above. For example, near infrared light produced by a solid-state laser may be passed through a non-linear crystal such as KTP (potassium titanyl phosphate), KTA (potassium titanyl arsenate) or BBO (beta barium borate).

Depending on the design, the near infrared radiation may be converted to green wavelengths (e.g. about 0.532 $\mu$m by doubling) or to ultraviolet wavelengths (e.g. about 0.355 $\mu$m by tripling or to 0.265 $\mu$m by quadrupling). It will be appreciated that other laser technologies may be used to produce laser light at these and/or other wavelengths covering the electromagnetic spectrum (e.g. from deep ultraviolet to the far infrared), and that any of these laser technologies may be used for marking applications.

Known hollow core fibers made of silica glass have been used for years in medical and industrial applications for laser power transmission. The inside diameter of the fiber is typically coated with a reflective coating such as silver or a silver-based compound. The coating quality determines the power transmission loss, bending loss, and reliability. For power transmission the inside diameter of the fiber typically ranges from 500 $\mu$m to 1 mm. However, if the application requires good beam quality, the inside diameter must be less than 400 $\mu$m and typically less than 300 $\mu$m for $CO_2$ laser transmission. The coating process limits the length of small diameter fibers to less than 3 meters. Due to material absorption, the coupling efficiency is critical at $CO_2$ wavelengths and the power transmission losses increases exponentially above wavelengths of about 9.5 $\mu$m. A combination of the need of small inner diameter for good beam quality; the need for good coupling efficiency; and an avoidance of high-power loss severely restricts the usefulness of known hollow core fibers for marking applications.

Solid core fibers have also been developed for laser delivery. These fibers typically comprise silver halide and are limited to 30 - 40 W of radiative power with a typical transmission of about 40% through a 4-meter length fiber. The largest radiative loss through such fibers is due to Fresnel reflection losses at interfaces of the fiber. Silver halide is also photosensitive and requires shielding from visible and UV light to prevent darkening and increased absorption loss. Furthermore, the complexities of cooling and coupling such fibers have prevented the use in laser marking applications.

According to a first aspect of the invention, there is provided a laser marking system comprising a laser configured to produce a laser beam, a marking head configured to project the laser beam onto a target, and a negative curvature hollow core fiber configured to transmit the laser beam from the laser to the marking head.

The laser may comprise a gas laser, e.g. a $CO_2$ laser. The laser may comprise a solid-state laser. The solid-state laser may comprise, for example, a Nd:YAG (neodymium doped yttrium aluminum garnet, i.e. a YAG) laser or a Nd:VO4 (neodymium doped yttrium orthovanadate, i.e. a vanadate) laser. The laser may comprise a non-linear optical element configured to convert a first wavelength of light to a second wavelength light (e.g. converting near infrared light to ultraviolet light). The non-linear optical element may comprise a crystal such as, for example, KTP (potassium titanyl phosphate), KTA (potassium titanyl arsenate) or BBO (beta barium borate).

The laser marking system advantageously allows the transmission of wavelengths of radiation (e.g. infrared) in high-energy pulses that have not previously been possible. The laser marking system advantageously improves the transmission of wavelengths of ultraviolet and/or near infrared radiation in high-energy pulses compared to known laser marking systems. The efficiency of the laser marking system is greater than known laser marking systems. The separation of the laser and the marking head using the negative curvature hollow core fiber advantageously enables greater flexibility of use of the laser marking system in production lines.

Known hollow core fibers cannot be used to transmit ultraviolet radiation because the internal wall coatings cannot withstand the high power of ultraviolet radiation and suffer material degradation. Known solid core fibers may be used to transmit ultraviolet radiation for a limited range of uses. However, the known solid core fibers suffer material degradation when exposed to ultraviolet radiation energy at the power levels required for laser marking applications. Known fibers in general have a low threshold for damage and are therefore difficult to optically couple to other optical components. For example, known solid core fibers have a core diameter that may be about five times smaller than that of negative curvature hollow core fibers, making the known solid core fibers less mechanically robust and more difficult and expensive to optically couple to other optical components (e.g. the marking head) compared to negative curvature hollow core fibers.

The negative curvature hollow core fiber has a lower bending loss compared to known fibers. This advantageously allows the negative curvature hollow core fiber to transmit radiation (e.g. infrared, near infrared and/or ultraviolet radiation) in confined spaces (e.g. compact production lines comprising multiple components) by allowing bending of the negative curvature hollow core fibre around obstacles without causing an unacceptable loss in transmission. The negative curvature hollow core fiber performs better (i.e. experiences lower losses and has a higher damage threshold) than known fibers when transmitting high-power pulses of laser light. The negative curvature hollow core fiber may have a larger core diameter than known fibers. This advantageously increases mechanical robustness of the negative curvature hollow ore fiber and reduces a difficulty and cost of coupling the negative curvature hollow core fiber to other optical components compared to known fibers.

The negative curvature hollow core fiber may be an anti-resonant negative curvature hollow core fiber.

Anti-resonant hollow core fibers are negative curvature fibers having a cladding structure that reduces or inhibits optical coupling between a core of the fiber and a cladding of the fiber, resulting in reduced losses at the desired wavelengths.

The laser beam may comprise infrared electromagnetic radiation.

The infrared electromagnetic radiation may comprise a wavelength that is greater than or equal to about 8 $\mu$m. The infrared electromagnetic radiation may comprise a wavelength that is less than or equal to about 11 $\mu$m. The infrared electromagnetic radiation may comprise a wavelength of about 9.3 $\mu$m. The infrared electromagnetic radiation may comprise a wavelength of about 9.6 $\mu$m. The infrared electromagnetic radiation may comprise a wavelength of about 10.2 $\mu$m. The infrared electromagnetic radiation may comprise a wavelength of about 10.6 $\mu$m.

The laser beam may comprise near infrared electromagnetic radiation. The near infrared electromagnetic radiation may comprise a wavelength that is greater than or equal to about 0.780 $\mu$m. The near infrared electromagnetic radiation may comprise a wavelength that is less than or equal to about 3 $\mu$m. The near infrared electromagnetic radiation may comprise a wavelength of about 1.06 $\mu$m.

The laser beam may comprise ultraviolet electromagnetic radiation. The ultraviolet electromagnetic radiation may comprise a wavelength that is greater than or equal to about 100 nm. The ultraviolet electromagnetic radiation may comprise a wavelength that is less than or equal to about 400nm. The ultraviolet electromagnetic radiation may comprise a wavelength of about 265 nm. The ultraviolet electromagnetic radiation may comprise a wavelength of about 355 nm.

The negative curvature hollow core fiber comprises chalcogenide glass.

The chalcogenide glass may comprise one or more of the following materials: $As_{30}Se_{50}Te_{20}$; $As_2S_3$;

$As_2Se_3$; $Ge_{15}As_{25}Se_{40}Te_{20}$; and, $As_{40}S_{30}Se_{30}$. The chalcogenide glass may comprise other combinations and/or dopants such as rare earth elements.

The negative curvature hollow core fiber may comprise silica for ultraviolet transmission and/or near infrared transmission. The negative curvature hollow core fiber may comprise Hydrogen infused silica for ultraviolet radiation transmission. Hydrogen infused silica may advantageously improve a transmission of ultraviolet radiation and/or improve an operational lifetime of the negative curvature hollow core fiber when used to transmit ultraviolet radiation.

The laser marking system may comprise an umbilical between the laser and the marking head. The negative curvature hollow core fiber may be located within the umbilical.

The umbilical may have a length of about 3 metres or more. The umbilical may have a length of about 10 metres.

An end of the negative curvature hollow core fiber may be tapered.

A tapered fiber advantageously improves a coupling efficiency of the negative curvature hollow core fiber with the laser and/or the marking head, thereby improving an efficiency of the laser marking system.

The negative curvature hollow core fiber may comprise a plurality of capillaries. The capillaries may have generally arched, generally circular, generally oval or generally conical shapes. The capillaries may form one or more ring structures around the core of the negative curvature hollow core fiber. Each ring of capillaries may comprise a different number of capillaries and/or different sized capillaries and/or different shaped capillaries. A ring of generally round or generally circular capillary tubes may be preferable due to their relatively high mechanical strength and a relative ease with which they may be manufactured compared to other shapes. The capillaries may be formed from optical fibers.

Thicknesses of the capillary walls may be selected in accordance with the following equation:

$$t = \frac{(m-0.5)\lambda}{2\sqrt{n_1^2-1}}; \ \text{m} = 1,2,3, \ldots$$

where t is the capillary wall thickness, $\lambda$ is the wavelength of radiation that the negative curvature hollow core fiber is configured to transmit, $n_1$ is the refractive index of the capillary material, and m is a positive integer. The smaller the value of *m*, the smaller the thickness of the capillary walls. As such, selection of the value of *m* may at least partially depend upon fabrication limitations of a material used to from the capillary walls. The thicknesses of the capillary walls may be within the inclusive range of about -5% to about +5% of the calculated value of *t*.

The thicknesses of the capillary walls may be about 0.3 $\mu$m or more for transmitting infrared radiation (e.g. produced by a $CO_2$ laser). The thicknesses of the capillary walls may be about 15 $\mu$m or less for transmitting infrared radiation (e.g. produced by a $CO_2$ laser). The thicknesses of the capillary walls may be about 0.3 $\mu$m or more for transmitting near infrared radiation. The thicknesses of the capillary walls may be about 3 $\mu$m or less for transmitting near infrared radiation. The thicknesses of the capillary walls may be about 100 nm or more for transmitting ultraviolet radiation. The thicknesses of the capillary walls may be about 600 nm or less for transmitting ultraviolet radiation. The thicknesses of the capillary walls may be selected at least partially based on a refractive index of the capillaries and/or a wavelength of radiation that is to be transmitted by the negative curvature hollow core fiber and/or a geometry of the anti-resonant structure (e.g. number of capillaries, diameters of the capillaries, spacing of capillaries, shapes of capillaries).

A ratio of an inner diameter of the capillaries to an outer diameter of the capillaries may be selected in at least partial dependence on properties of the laser beam (e.g. a wavelength and/or a power of the laser beam) that the negative curvature hollow core fiber is configured to transmit. For example, for transmitting infrared light generated by a $CO_2$ laser, a ratio of an inner diameter of the capillaries to an outer diameter of the capillaries may be between about 0.8 and about 0.9. It will be appreciated that this range of ratios of inner and outer capillary diameters is merely an example, and that the range of ratios will vary depending on the planned application of the negative curvature hollow core fiber (e.g. wavelength of light to be transmitted, cross-sectional size and length of the negative curvature hollow core fiber, etc.).

The capillaries may form part of a cladding layer of the negative curvature hollow core fiber. A diameter of the hollow core of the fiber may correspond to the diameter of the largest circle that can be circumscribed within an internal perimeter formed by the capillaries. The core diameter may be selected at least partially based on a refractive index of the capillaries and/or a wavelength of radiation that is to be transmitted by the negative curvature hollow core fiber and/or a geometry of the anti-resonant structure (e.g. number of capillaries, diameter of capillaries, spacing of capillaries, shapes of capillaries). In general, the core diameter may scale with a wavelength of the laser beam that is to be transmitted by the negative curvature hollow core fiber. In general, a quality of a laser beam transmitted by the negative curvature hollow core fiber may be improved by reducing a core diameter of the negative curvature hollow core fiber. The core diameter may be at least partially determined by a geometry of the capillaries and/or a cladding structure of the negative curvature hollow core fiber. For example, in the case of a ring of generally round or generally circular capillaries, the core diameter of the negative curvature hollow core fiber may be selected in at least partial dependence on the following equation:

$$D_{core} = \frac{(d_{tube} + 2t + g)}{\sin(\frac{\pi}{N})} - (d_{tube} + 2t)$$

where $D_{core}$ is the core diameter of the negative curvature hollow core fiber, $d_{tube}$ is the diameter of the capillaries, t is the thickness of the capillary walls, g is the gap distance between adjacent capillaries, and N is the number of capillaries. This equation may be used to estimate the core diameter of other capillary structures and geometries such as, for example, generally arched, generally oval, generally conical, etc. shapes. For example, the term representing the diameters of the generally round or generally circular capillaries may be replaced by a term representing a greatest diameter of a shape of the capillaries. The core diameter of the negative curvature hollow core fiber may be within the inclusive range of about -10% and about +10% of the calculated value of $D_{core}$.

The negative curvature hollow core fiber may have a core diameter of about 200 μm or more for transmitting infrared radiation (e.g. produced by a $CO_2$ laser). The negative curvature hollow core fiber may have a core diameter of about 500 μm or less for transmitting infrared radiation (e.g. produced by a $CO_2$ laser). The negative curvature hollow core fiber may have a core diameter of about 10 μm or more for transmitting ultraviolet radiation. The negative curvature hollow core fiber may have a core diameter of about 20 μm or less for transmitting ultraviolet radiation. The negative curvature hollow core fiber may have a core diameter of about 20 μm or more for transmitting near infrared radiation. The negative curvature hollow core fiber may have a core diameter of about 100 μm or less for transmitting near infrared radiation.

The laser marking system may comprise one or more coupling lenses for optically coupling the negative curvature hollow core fiber to one or more other optical elements. An optimum ratio of a focal length to a diameter of an entrance pupil (i.e. an optimum F#) of the coupling lens for coupling into the negative curvature hollow core fiber may be selected in at least partial dependence on the following equation:

$$F\#_{Opt} = 0.16\pi \frac{D_{core}}{\lambda}$$

where $D_{core}$ is the core diameter of the negative curvature hollow core fiber, and λ is the wavelength of radiation that the negative curvature hollow core fiber is configured to transmit. In practice, if the F# of the coupling lens is less than $F\#_{Opt}$ then more optical power may be coupled into higher order modes within the negative curvature hollow core fiber and thereby be attenuated. In practice, if the F# of the coupling lens is less than $F\#_{Opt}$ then the optical power may be clipped at an entrance to the negative curvature hollow core fiber, which may in turn result in heating and possible thermal damage caused to the entrance of the negative curvature hollow core fiber. As such, the F# of the coupling lens may preferably be within the inclusive range of -5% and 2% of $F\#_{Opt}$.

The F# of the coupling lens may be selected in at least partial dependence on properties of the laser beam (e.g. a wavelength of the laser beam) that is to be transmitted and/or a geometry of the negative curvature hollow core fiber itself. For example, for transmitting infrared light generated by a CO2 laser, the negative curvature hollow core fiber may have a core diameter of about 300 μm, and the F# of the coupling lens may be between about 15.4 and about 17.0. It will be appreciated that this range of F# is merely an example, and that the range of F# will vary depending on the planned application of the negative curvature hollow core fiber (e.g. wavelength of light to be transmitted, core diameter of the negative curvature hollow core fiber, etc.).

Once the properties of the laser beam (e.g. the wavelength, power, the radiation source type - $CO_2$, solid-state, etc.) and the optimum F# of the coupling lens are known, the coupling lens (or lenses) may be designed using standard optical design techniques. Laser sources typically used in laser marking applications may have laser beam diameters at the output of the laser source in the inclusive range of about 0.2 mm to about 4.0 mm, and full-angle beam divergences in the inclusive range of about 2.0 mrad to about 8.0 mrad. Laser sources typically used in laser marking applications may have a beam parameter product in the inclusive range of about 0.2 mm mrad to about 10.0 mm mrad. The beam parameter product may be defined as the laser beam radius multiplied by the half-angle beam divergence. In practice, as the laser beam passes through the optics of the laser marking system, the laser beam may become distorted due to optical aberrations and/or mode degradation in the negative curvature hollow core fiber. This may result in an increase of the beam parameter product at an output of the laser marking system compared to the input of the negative curvature hollow core fiber. The beam parameter product at the output of the laser marking system may generally be in the inclusive range of about 1.0 mm mrad to about 40.0 mm mrad.

A cross-sectional radius of the laser beam when entering the negative curvature hollow core fiber may be selected in at least partial dependence on properties of the laser beam (e.g. a wavelength and/or power of the laser beam) that is to be transmitted and/or a geometry of the negative curvature hollow core fiber itself. For example, for transmitting infrared light generated by a CO2 laser, the negative curvature hollow core fiber may have a core diameter of about 300 μm, and the laser beam may have a cross-sectional radius of between about 91 μm and about 100 μm when entering the negative curvature hollow core fiber from the laser. A beam parameter product of the laser beam may be about 4.0 or less at the target. The beam parameter product of the laser beam may be about 3.5 or less at the target. A beam parameter product of the laser beam may be about 3.5 or less at an output of the laser. The beam parameter product of the laser beam may be about 3.0 or less at the output of the laser. The laser beam may have a cross-sectional radius of between about 0.7 mm and about 1.3 mm. The laser beam may have a half-angle divergence of between about 2.3 mrad and about 4.3 mrad. It will be appreciated that values merely provide an example, and that the ranges of cross-sectional radii, beam parameter products and half-angle divergences will vary depending on the planned application of the negative curvature hollow core fiber (e.g. wavelength of light to be transmitted, cross-sectional size and length of the negative curvature hollow core fiber, etc.).

The laser marking system may comprise an optical alignment system located between the laser and the negative curvature hollow core fiber configured to change a position and/or angle of the laser beam relative to a core of the negative curvature hollow core fiber.

Gas lasers in general (e.g. $CO_2$ lasers) may be unstable until they reach what may be referred to as thermal equilibrium. When the laser is activated, the laser heats and plasma optical characteristics change non-uniformly along a length of the laser. The optical axis of the laser may change as the housing or extrusion thermally expands and/or deforms, and optical mounts of the laser may flex as they heat and cool non-uniformly. All of these thermal movements can cause the laser beam exiting the laser to move around in the output aperture and/or deviate angularly from the optical axis of the laser marking system. This all contributes to what may be referred to as pointing error, and is a dynamic characteristic that may require dynamic compensation to reduce the negative effects on the performance of the laser marking system. The optical alignment system may compensate for such thermal alignment errors.

The optical alignment system may advantageously improve a coupling efficiency of the negative curvature hollow core fiber and thereby improves an efficiency of the laser marking system.

The optical alignment system may comprise a first adjustable optical element configured to receive the laser beam from the laser. The optical alignment system may comprise a second adjustable optical element configured to receive the laser beam from the first adjustable optical element and direct the laser beam towards an input of the core of the negative curvature hollow core fiber. The optical alignment system may comprise a first detector configured to detect a position of the laser beam relative to the second adjustable optical element. The optical alignment system may comprise a second detector configured to detect a position of the laser beam relative to the input of the core of the negative curvature hollow core fiber.

Two mirrors, typically in a periscope configuration, may be used within the optical alignment system. The mirrors may each be affixed to a mount with tip-tilt adjustment via electronically adjustable screws or linear motors. The first mirror tip-tilt adjustment screws or motors may position the laser beam on the surface of the second mirror. The second mirror tip-tilt adjustment screws or motors may position the laser beam to be coaxial with a desired optical axis through the laser marking system. In this manner, any misalignment error from any source of misalignment can be compensated for.

The first and second detectors may be configured to detect angular and/or translational positions of the laser beam.

The first adjustable optical element may comprise a first rotatable reflector. The second adjustable optical element may comprise a second rotatable reflector.

The first detector may be located behind the second rotatable reflector. The first detector may be configured to detect a portion of the laser beam that transmits through the second detector.

The second reflector may have a reflectivity of between about 97% and about 99.7%.

The second rotatable reflector has a non-zero thickness through which the second portion of the laser beam transmits. The second portion of the laser beam may undergo refraction when passing through the second rotatable reflector and change direction. A centre point of the first position detector may be positioned offset a centre point of the second rotatable reflector to account for the change in direction of the second portion of the laser beam caused by refraction through the second rotatable reflector.

The first detector may be located between the first rotatable reflector and the second rotatable reflector. The first detector may comprise an alignment aperture that is aligned with an optical axis of the laser marking system. The alignment aperture may have a diameter that is substantially equal to a diameter of the laser beam.

A second implementation would be to use a quadrant detector having a hole at the centre of the detector. The hole diameter may be sized to be the size of the laser beam. The detector should be positioned such that the centre of the hole is aligned with the desired axis of the beam. In this manner, any beam position error from the desired beam axis would be detected by the quadrant detector and provide a signal to the appropriate actuators on the first mirror mount to move the beam to the desired position.

The optical alignment system may comprise a beam sampler located between the first rotatable reflector and the second rotatable reflector. The beam sampler may be configured to direct a portion of the laser beam to the first detector.

The beam sampler may be positioned in the beam path as close to the input side or the exit side of the second mirror. The beam sampler may be a beam splitter such as an optical flat having one side coated to reflect a small percentage of the beam (<1%) to a quadrant detector and the other side anti-reflection coated allowing the remaining percentage of the beam to pass through the device. The effect of the thickness of the device being compensated in the positioning of the second mirror or by placing a second flat of the same thickness at a complimentary angle in the beam path after the beam sampler.

The beam sampler may comprise a beam splitter.

The beam sampler may comprise a reflective element having an alignment aperture that is aligned with an optical axis of the laser marking system. The alignment aperture may have a diameter that is substantially equal to a diameter of the laser beam.

The second detector may be located between the second rotatable reflector and the input of the core of the negative curvature optical fiber. The second detector may comprise an alignment aperture that is aligned with an optical axis of the laser marking system. The alignment aperture of the second detector may have a diameter that is substantially equal to a diameter of the laser beam.

The optical alignment system may comprise a beam sampler located between the second rotatable reflector and the input of the core of the negative curvature hollow core fiber. The beam sampler may be configured to direct a portion of the laser beam to the second detector.

The beam sampler may comprise a beam splitter.

The beam sampler may comprise a reflective element having an alignment aperture that is aligned with an optical axis of the laser marking system. The alignment aperture may have a diameter that is substantially equal to a diameter of the laser beam.

The beam sampler may be a reflector with a hole the size of the beam where the mirror reflects any portion of beam missing the hole to a quadrant detector. In this configuration, the signal from the quadrant detector drives the alignment mirror in such a way as to minimize the beam hitting the quadrant detector thereby keeping the beam aligned.

The detector may be a quadrant detector. The quadrant detector may have a hole at the centre of the detector. The hole diameter may be sized to be the size of the laser beam. The detector may be positioned such that the centre of the hole is aligned with the desired axis of the beam. In this manner, any beam position error from the desired beam axis would be detected by the quadrant detector and provide a signal to the appropriate actuators on the first mirror mount to move the beam to the desired position.

The optical alignment system may comprise a controller configured to receive signals from the first and second detectors and use the signals to control rotational positions of the first and second rotatable reflectors.

The optical alignment system may comprise a fixed reflector that is aligned with a desired optical axis of the laser marking system. The fixed reflector may be configured to receive the laser beam from the laser and direct the laser beam to a rotatable reflector. The rotatable reflector may be configured to correct angular errors and direct the laser beam to the input of the negative curvature hollow core fiber

The first and second rotatable reflectors may be driven by first and second controllers that are capable of changing the rotational positions of the first and second rotatable reflectors by sub-micron amounts.

The first and second controllers may be capable of changing the rotational positions of the first and second rotatable reflectors by sub-micron amounts along two substantially orthogonal rotation axis to allow fine (x, y) control of the position of the laser beam.

The first and second detectors may each comprise a quadrant detector.

A quadrant detector is able to output a signal that will enable the accurate determination of the x and y co-ordinate, (x ,y), position of the laser beam on the detector. This data may be used to drive the actuators of the rotatable reflectors in a feedback manner to improve an alignment of the laser beam with the optical axis of the laser marking system. For example, the rotatable reflectors may be adjusted in accordance with the detector signals until (x, y) position coordinates stay below a threshold value or reach an aligned value of (0, 0). The feedback signal may be kept at (0, 0) and the laser beam may remain aligned with the optical axis of the laser marking system.

The laser marking system may comprise a first protective aperture located between the laser and the negative curvature hollow core fiber at an input of the core of the negative curvature hollow core fiber. The first protective aperture may have a diameter that is substantially equal to a core diameter of the negative curvature hollow core fiber.

The laser marking system may comprise a second protective aperture located between the laser marking head and the negative curvature hollow core fiber at an output of the core of the negative curvature hollow core fiber. The second protective aperture may have a diameter that is substantially equal to a core diameter of the negative curvature hollow core fiber.

The first and/or second protective apertures may comprise a pin-hole. To protect the end of the fiber from damage from the focussed beam of the laser, a protective pin-hole having the same diameter as the core of the fiber is placed at the input end of the fiber. To protect the end of the fiber from damage from radiation backscattered into the marking head, a protective pin-hole having the same diameter as the core of the fiber is placed at the output end of the fiber. Either pin-hole may be part of the fiber mount or a separate device. Either pin-hole is easily replaced and may be considered to be a sacrificial device to protect the more expensive and difficult to replace fiber.

According to a second aspect of the invention, there is provided a method of marking a target with a laser beam comprising using the laser marking system of the first aspect in accordance with claim 13.

According to a third aspect of the invention, there is provided a method of designing the laser marking system of the first aspect comprising:

(a) selecting a desired laser beam spot size at the target and a desired distance between the marking head and the target;
(b) designing optical components of the marking head in at least partial dependence on step (a) and determining a beam parameter product of the laser beam at the target;
(c) designing first coupling optics between the negative curvature hollow core fiber and the marking head in at least partial dependence on step (b);
(d) selecting a desired beam parameter product of the laser beam between the negative curvature hollow core fiber and the marking head and designing the negative curvature hollow core fiber in at least partial dependence on the beam parameter product of the laser beam between the negative curvature hollow core fiber and the marking head;
(e) designing second coupling optics between the laser and the negative curvature hollow core fiber in at least partial dependence on step (d);
(f) designing the laser in at least partial dependence on the beam parameter product of the laser beam between the negative curvature hollow core fiber and the marking head; and,
(g) manufacturing the laser marking system designed in accordance with the foregoing steps.

Regarding step (a), the desired laser beam spot size may be about 100 $\mu$m or more. The desired laser beam spot size may be about 500 $\mu$m or less. The desired distance between the marking head and the target may be about 50 mm or more. The desired laser beam spot size may be about 250 $\mu$m. The desired distance between the marking head and the target may be about 250 mm or less. The desired distance between the marking head and the target may be about 125 mm.

Regarding step (b), the beam parameter product of the laser beam at the target may be defined as the product of the radius of the laser beam and the divergence of the laser beam at the target.

Regarding step (c), the first coupling optics may be configured to convert a divergent laser beam exiting the negative curvature hollow core fiber into a collimated laser beam entering the marking head. The first coupling optics may comprise one or more lenses of a material having a relatively high transmissivity (e.g. coated lenses for a transmissivity of about 99% or more) at the desired wavelength (e.g. infrared, near infrared or ultraviolet wavelengths). Alternatively, the first coupling optics may comprise one or more mirrors having a relatively high reflectivity (e.g. a reflectivity of about 99% or more). For infrared transmission, the lenses used in the first coupling optic may comprise one or more materials such as zinc selenide, zinc sulphide, germanium, gallium arsenide or other materials that are sufficiently transparent at infrared wavelengths (e.g. wavelengths of radiation generated by a $CO_2$ laser). For near infrared transmission, the lenses used in the first coupling optic may comprise one or materials such as fused silica, a crown glass (e.g. borosilicate or BK7) and/or a synthetic fused silica such as SUPRSIL provided by Heraeus, a German company. For ultraviolet transmission, the lenses used in the first coupling optic may comprise, for example, ultraviolet grade fused silica. A geometry of the lenses (e.g. a diameter and curvature of the lens surfaces) may depend on the diameter and divergence of the laser beam exiting the negative curvature hollow core fiber and/or the desired diameter of the laser beam entering the marking head.

Regarding step (d), designing the laser marking system such that the beam parameter product at the target is greater than the beam parameter product between the negative curvature hollow core fiber and the marking head may reduce radiative loses and/or improve a performance and efficiency of the laser marking system.

Regarding step (e), the relevant design parameters for designing the second coupling optics may be the same the relevant design parameters for the output coupling optics as described for step (c) above.

Regarding step (f), the relevant design parameters for coupling the laser to the negative curvature hollow core fiber may comprise the diameter of the laser beam output by the laser and/or the divergence of the laser beam output by the laser. The beam parameter product of the laser (i.e. the product of the laser beam radius and the laser beam divergence) may be less than that of all the following components of the laser marking system. For example, the beam parameter product of the laser may be about 3.5 or less to reduce radiative losses through the laser marking system.

The method may further comprise using forward and/or backward iteration to adjust the laser marking system before its manufacture.

Forward and/or backward iteration may involve considering factors such as the tolerances of the components of the laser marking system, the availability of materials, costs, and performance variances, and determining suitable compromises between these factors. If the design of the laser marking system begins with the marking head and progresses through the negative curvature hollow core fiber back to the laser, then if constraints on the laser design prevent meeting the desired design goal, it may be necessary to reverse the design process with the new constrained laser design. This process may be iterated to achieve an improved performance with the modified design parameters.

The laser marking system designed in accordance with the method of the third aspect of the invention is provided.

According to a fourth aspect of the invention, there is provided a method of manufacturing a laser marking system comprising providing a laser configured to generate a laser beam, providing a marking head configured to project the laser beam onto a target to be marked, and connecting the laser to the marking head using a negative curvature hollow core fiber configured to transmit the laser beam from the laser to the marking head.

According to a fifth aspect of the invention, there is provided an optical alignment system comprising a first adjustable optical element configured to receive a laser beam, a second adjustable optical element configured to receive the laser beam from the first adjustable optical element and direct the laser beam towards a target, a first detector configured to detect a position of the laser beam relative to the second adjustable optical element, and a second detector configured to detect a position of the laser beam relative to the target.

The first adjustable optical element may comprise a first rotatable reflector. The second adjustable optical element may comprise a second rotatable reflector.

The first detector may be located behind the second rotatable reflector and may be configured to detect a portion of the laser beam that transmits through the second detector.

The first detector may be located between the first rotatable reflector and the second rotatable reflector and may comprise an alignment aperture that is aligned with an optical axis of the optical alignment system. The alignment aperture may have a diameter that is substantially equal to a diameter of the laser beam.

The optical alignment system may comprise a beam sampler located between the first rotatable reflector and the second rotatable reflector. The beam sampler may be configured to direct a portion of the laser beam to the first detector.

The beam sampler may comprise a beam splitter.

The beam sampler may comprise a reflective element having an alignment aperture that is aligned with an optical axis of the laser marking system. The alignment aperture may have a diameter that is substantially equal to a diameter of the laser beam.

The detectors may be quadrant detectors.

The optical alignment system may be used in laser marking applications and/or could auto-alignment of articulated arms used in medical and material processing applications of lasers.

Features described above with reference to one aspect of the invention may be used in combination with other aspects of the invention. For example, features of an optical alignment system described above with reference to the first aspect of the invention may be combined with the optical alignment system of the fifth aspect of the invention, and vice versa.

BRIEF DESCRIPTION OF THE DRAWINGS

The accompanying drawings are not intended to be drawn to scale. In the drawings, each identical or nearly identical component that is illustrated in various figures is represented by a like numeral. For purposes of clarity, not every component may be labelled in every drawing. Embodiments of the invention will now be described, by way of example only, with reference to the accompanying schematic drawings, in which:

Fig. 1 schematically depicts a laser marking system according to an embodiment of the invention;
Fig. 2 schematically depicts a cross-sectional view of a negative curvature hollow core fiber according to an embodiment of the invention;
Fig. 3 shows a perspective view of portion of a laser marking system according to an embodiment of the invention;
Fig. 4 schematically depicts a perspective view of some of the internal components of the optical alignment system of Fig. 3;
Fig. 5 schematically depicts a magnified perspective view of some of the components of the optical alignment system of Fig. 4;
Fig. 6 schematically depicts a ray trace of a laser beam interacting with the components of Fig. 5;
Fig. 7 schematically depicts a perspective view of a beam sampler of an optical alignment system according to an embodiment of the invention;
Fig. 8 schematically depicts a view from the front of a detector of an optical alignment system according to an embodiment of the invention;
Fig. 9 schematically depicts a ray trace of an aligned laser beam interacting with the components of an optical alignment system according to an embodiment of the invention;
Fig. 10 schematically depicts a ray trace of a misaligned laser beam interacting with the components of the optical alignment system of Fig. 9;
Fig. 11 schematically depicts a ray trace of a laser beam interacting with the components of an alternative optical alignment system without alignment compensation according to an embodiment of the invention;
Fig. 12 schematically depicts the ray trace of Fig. 11 with alignment compensation applied by the optical alignment system;
Fig. 13 shows part of a method of designing a laser marking system according to an embodiment of the invention, with all steps of the method being provided in claim 14; and
Fig. 14 shows a method of manufacturing a laser marking system according to an embodiment of the invention.

DETAILED DESCRIPTION

Aspects and embodiments disclosed herein are not limited to the details of construction and the arrangement of components set forth in the following description or illustrated in the drawings. Aspects and embodiments disclosed herein are capable of being practiced or of being carried out in various ways.

Aspects and embodiments disclosed herein include a marking head for projecting a radiation beam of a laser scanning or marking system and a laser scanning or marking system including such a system. Laser marking systems may be utilized in production lines for marking various types of articles. Laser marking systems may be utilized to imprint bar codes, unique identifying marks, expiration dates, or other information on items passing through a production line. In some implementations, carbon dioxide ($CO_2$) gas lasers may be used in laser marking systems. Carbon dioxide lasers may produce beams of infrared radiation in four principal wavelength bands centering on 9.3, 9.6, 10.2, and 10.6 micrometers ($\mu$m). In other implementations, a laser configured to produce near infrared radiation may be used in laser marking systems. In alternative implementations, a laser configured to produce ultraviolet radiation may be used in laser marking systems. Lasers utilized in laser marking systems are typically operated at laser power levels in the tens of watts.

Laser scanning or marking systems are not limited to using $CO_2$ lasers. In some implementations, fiber lasers or diode lasers may be used in laser marking systems. In some aspects and embodiments, optical scanners or markers may utilize lasers that operate in the ultraviolet, visible, or near infrared wavelengths or any other type of laser or optical illumination source. The use of visible radiation beams in laser scanner systems may be advantageous in that a user can see the laser beam where it illuminates an object being scanned so the user can adjust the position of the laser scanner or object being scanned so that the laser illuminates a desired portion of the object.

Embodiments of laser scanners disclosed herein may include a marking head comprising at least two mirror turning devices such as piezoelectric or magnet drives, direct current drives, stepper motors, servomotors, or galvanometers having mirrors attached. The mirrors used in embodiments of the laser marking system disclosed herein may be silver coated or gold-coated mirrors or any other suitably coated material. Windows and lenses used in embodiments of the laser scanner/marker disclosed herein may be, for example, germanium, zinc selenide, quartz, BK7 borosilicate glass, SUPRSIL provided by Heraeus, a German company, ultraviolet grade fused silica or any other suitable material.

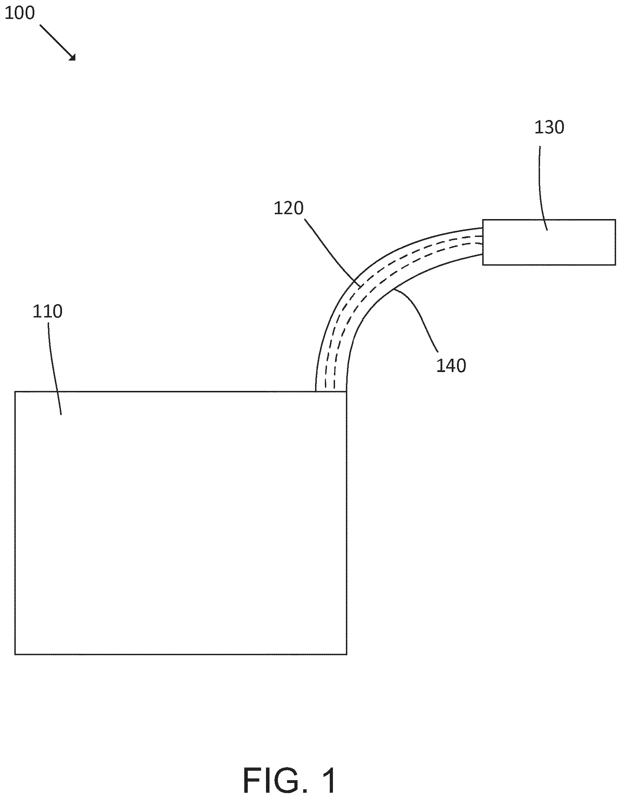

Fig. 1 schematically depicts a laser marking system 100 according to an embodiment of the invention. The laser marking system 100 comprises a laser 110 configured to produce a laser beam (not shown). The laser beam may comprise infrared radiation having a wavelength of between about 8 $\mu$m and about 11 $\mu$m, e.g. about 10.6 $\mu$m. The laser beam may comprise near infrared electromagnetic radiation having a wavelength of between about 0.78 $\mu$m and about 3 $\mu$m, e.g. about

1.06 $\mu$m. The laser beam may comprise ultraviolet electromagnetic radiation having a wavelength of between about 100nm and about 400 nm, e.g. about 265 nm or about 355 nm.

The laser marking system 100 further comprises a marking head 130 configured to project the laser beam onto a target (not shown) to be marked by the laser marking system 100. The marking head 130 may comprise an electromagnetic radiation steering mechanism (not shown) configured to steer the laser beam exiting the marking head 130. The marking head 130 may further comprise a variable optical path length assembly (not shown) configured to adjust a focal plane of the laser marking system 100. The marking head 130 may further comprise focusing optics (not shown) and/or a collimator (not shown).

The marking head 130 may be substantially cylindrical. The marking head 130 may have a first dimension in a first direction of less than around 400 mm and a second dimension in a second direction perpendicular to the first direction of less than around 60 mm. The marking head 130 may have a third dimension in a third direction perpendicular to the first direction and the second direction of less than around 60 mm.

The marking head 130 may comprise a cooling system (not shown) for providing cooling to a component (e.g. actuators of the electromagnetic radiation steering mechanism and/or the variable optical path length assembly). The marking head 130 may further comprise a detector (not shown) configured to detect a presence of the target to be marked. The detector may comprise a camera. The laser marking system 100 may further comprise an encoder (not shown) for converting marking instructions to control signals for the marking head 130.

The laser marking system 100 may further comprise a user interface (not shown), e.g. a graphical user interface. The user interface may form part of a controller of the laser marking system (not shown). The user interface may comprise a screen for providing visual signals to a user and/or a speaker for providing audio signals to a user. The laser marking system 100 may comprise a transceiver for remote control of the laser marking system 100. The laser marking system 100 may comprise a connection (e.g. an Internet connection of an Ethernet connection) for integration with other devices (e.g. on a production line of which the laser marking system forms a part) via the Internet of Things.

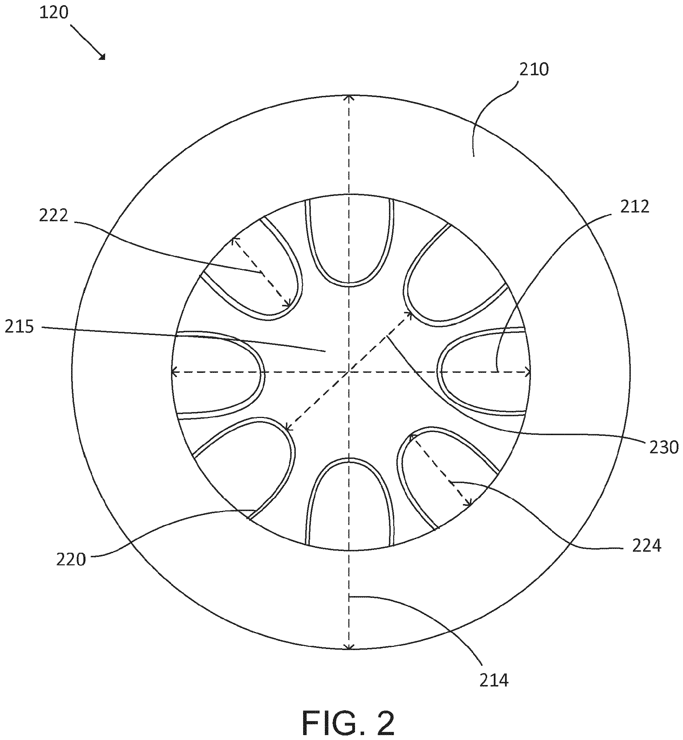

The laser marking system 100 further comprises a negative curvature hollow core fiber 120 configured to transmit the laser beam from the laser 110 to the marking head 130. The negative curvature hollow core fiber 120 is described and shown in more detail with respect to Fig. 2.

The laser marking system 100 of Fig. 1 comprises a flexible umbilical 140 between the laser 110 and the marking head 130. The negative curvature hollow core fiber 120 is located within the umbilical 140. The umbilical 140 may have a length of about 3 meters or more. The umbilical 140 may have a length of about 10 meters or less.

A laser marking process using the laser marking system may include providing radiation to the negative curvature hollow core fiber 120 by coupling the laser 110 to the umbilical 140. The negative curvature hollow core fiber 120 may direct the laser beam to a collimator of the marking head 130. The collimator may condition the laser beam in a desired manner before directing the laser beam to other components of the marking head 130 such as the variable optical path length assembly (which may alter a focal plane of the laser marking system 100 in a desired manner) and/or the electromagnetic radiation steering mechanism (which may steer the laser beam exiting the marking head 130 in a desired manner).

Fig. 2 schematically depicts a cross-sectional view of a negative curvature hollow core fiber 120 according to an embodiment of the invention. The negative curvature hollow core fiber 120 comprises a hollow core 215 having a core diameter 230. The negative curvature hollow core fiber 120 further comprises a cladding 210 having an inner surface with an inner diameter 212 and an outer surface having an outer diameter 214. The inner diameter 212 and the outer diameter 214 may at least partially depend on the core diameter 230 and/or a number and size of capillaries 220. The negative curvature hollow core fiber 120 further comprises capillaries 220 located on the inner surface of the cladding 210. The capillaries 220 may form part of the cladding 210. The capillaries 220 may be configured to provide anti-resonance effects by reflecting and confining the laser beam within the hollow core 215. The capillaries 220 may be generally arch-shaped. The capillaries 220 may have other shapes. For example, the capillaries 220 may have generally circular, oval or conical shapes. The capillaries 220 may form one or more ring structures around the core 215 of the negative curvature hollow core fiber 120. Each ring of capillaries 220 may comprise a different numbers of capillaries 220, different sized capillaries 220 and/or different shaped capillaries 220. The capillaries 220 may be formed from fibers. The capillaries 220 each have a wall having an inner diameter 222 and an outer diameter 224. A ratio of the inner diameter 222 of each capillary 220 to the outer diameter 224 of each capillary 120 may be about 0.8 or more. A ratio of the inner diameter 222 of each capillary 220 to the outer diameter 224 of each capillary 120 may be about 0.9 or less. It will be appreciated that this range of ratios of inner and outer capillary diameters is merely an example in respect of a negative curvature hollow core fiber configured to transmit infrared radiation produced by a $CO_2$ laser. The range of ratios will vary depending on the planned application of the negative curvature hollow core fiber (e.g. wavelength of light to be transmitted, cross-sectional size and length of the negative curvature hollow core fiber, etc.).

Thicknesses of the capillary walls may be selected in accordance with the following equation:

$$t = \frac{(m-0.5)\lambda}{2\sqrt{n_1{}^2-1}}; \; m = 1,2,3, \ldots$$

where t is the capillary wall thickness, $\lambda$ is the wavelength of radiation that the negative curvature hollow core fiber is configured to transmit, $n_1$ is the refractive index of the capillary material, and m is a positive integer. Capillary walls having thickness that satisfy the equation may provide anti-resonant effects that reduce the optical coupling of the laser beam between the core 215 and the cladding 210, thereby reducing radiative losses within the negative curvature hollow core fiber 120. Multiple capillary wall thicknesses are possible for each wavelength of light as determined by the value of the positive integer m. The thicknesses of the capillary walls may be within the inclusive range of about -5% to about +5% of the calculated value of t.

The thicknesses of the capillary walls may be selected at least partially based on a refractive index of the capillaries and/or a wavelength of radiation that is to be transmitted by the negative curvature hollow core fiber and/or a geometry of the anti-resonant structure (e.g. number of capillaries, diameters of the capillaries, spacing of capillaries, shapes of capillaries). The thicknesses of the capillary walls may be about 0.3 $\mu$m or more for transmitting infrared radiation (e.g. produced by a $CO_2$ laser). The thicknesses of the capillary walls may be about 15 $\mu$m or less for transmitting infrared radiation (e.g. produced by a $CO_2$ laser). The thicknesses of the capillary walls may be about 0.3 $\mu$m or more for transmitting near infrared radiation. The thicknesses of the capillary walls may be about 3 $\mu$m or less for transmitting near infrared radiation. The thicknesses of the capillary walls may be about 100 nm or more for transmitting ultraviolet radiation. The thicknesses of the capillary walls may be about 600 nm or less for transmitting ultraviolet radiation.

The negative curvature hollow core fiber 120 may be an anti-resonant negative curvature hollow core fiber. That is, the cladding 210 of the negative curvature hollow core fiber 120 may comprise features (e.g. the capillaries 220) configured to reduce or inhibit optical coupling between a core of the negative curvature hollow core fiber 120 and the cladding 210, resulting in reduced radiative losses at desired wavelengths (e.g. infrared, near infrared and/or ultraviolet wavelengths).

The core diameter 230 of the negative curvature hollow core fiber 120 may at least partially depend on a wavelength of radiation that is to be transmitted by the negative curvature hollow core fiber 120. For example, the negative curvature hollow core fiber 120 may have a core diameter 230 of between about 150 $\mu$m and about 300 $\mu$m for infrared laser marking applications (e.g. wavelengths having a range of between about 8 $\mu$m and about 11 $\mu$m). As another example, the negative curvature hollow core fiber 120 may have a core diameter 230 of between about 20 $\mu$m and about 100 $\mu$m for near in-

frared laser marking applications (e.g. wavelengths having a range of between about 0.78 $\mu$m and about 3 $\mu$m). As a further example, the negative curvature hollow core fiber 120 may have a core diameter 230 of between about 10 $\mu$m and about 20 $\mu$m for ultraviolet laser marking applications (e.g. wavelengths having a range of between about 100 nm and about 400 nm).

The core diameter 230 may be selected at least partially based on a refractive index of the capillaries 220 and/or a wavelength of radiation that is to be transmitted by the negative curvature hollow core fiber 120 and/or a geometry of the anti-resonant structure (e.g. number of capillaries, diameter of capillaries, spacing of capillaries, shapes of capillaries). For example, in the case of a ring of generally round or generally circular capillaries, the core diameter 230 of the negative curvature hollow core fiber 120 may be selected in at least partial dependence on the following equation:

$$D_{core} = \frac{(d_{tube} + 2t + g)}{\sin(\frac{\pi}{N})} - (d_{tube} + 2t)$$

where $D_{core}$ is the core diameter of the negative curvature hollow core fiber, $d_{tube}$ is the diameter of the capillaries, t is the capillary wall thicknesses, g is the gap distance between adjacent capillaries, and N is the number of capillaries. This equation may be used to estimate the core diameter 230 of other capillary structures and geometries such as, for example, the generally arched capillaries of Fig. 2 and/or generally oval, generally conical, etc. shapes. For example, the term representing the diameters of the generally round or generally circular capillaries may be replaced by a term representing a greatest diameter of a shape of the capillaries 220. In general, a smaller core diameter 230 may provide improved laser beam quality but may also experience greater radiative losses, and desirable balances between these factors may be found for different applications. The core diameter of the negative curvature hollow core fiber may be within the inclusive range of about -10% and about +10% of the calculated value of $D_{core}$.

Aspects of the laser marking system 100 may be designed and/or operated in at least partial dependence on the core diameter 230 of the negative curvature hollow core fiber 120 such that acceptable coupling occurs between the negative curvature hollow core fiber 120 and the laser 110 and/or marking head 130. In general, selecting a cross-sectional radius of the laser beam for improved coupling into the negative curvature hollow core fiber 120 may at least partially depend on the wavelengths of radiation within the laser beam and/or the core diameter 230.

In an example embodiment involving transmitting infrared radiation produced by a $CO_2$ laser, the negative curvature hollow core fiber 120 may have a core diameter 230 of about 300 $\mu$m or less. In this example, the laser beam may be controlled by optics in the laser 110 to have a cross-sectional radius of about 91 $\mu$m or more when entering the negative curvature hollow core fiber 120 from the laser 130. The laser beam may have a cross-sectional radius of about 100 $\mu$m or less when entering the negative curvature hollow core fiber 120 from the laser.

The laser marking system may comprise one or more coupling lenses for optically coupling the negative curvature hollow core fiber to one or more other optical elements. An optimum ratio of a focal length to a diameter of an entrance pupil (i.e. an optimum F#) of the coupling lens for coupling into the negative curvature hollow core fiber may be selected in at least partial dependence on the following equation:

$$F\#_{Opt} = 0.16\pi \frac{D_{core}}{\lambda}$$

where $D_{core}$ is the core diameter of the negative curvature hollow core fiber, and $\lambda$ is the wavelength of radiation that the negative curvature hollow core fiber is configured to transmit. In practice, if the F# of the coupling lens is less than $F\#_{Opt}$ then more optical power may be coupled into higher order modes within the negative curvature hollow core fiber and thereby be attenuated. In practice, if the F# of the coupling lens is less than $F\#_{Opt}$ then the optical power may be clipped at an entrance to the negative curvature hollow core fiber, which may in turn result in heating and possible thermal damage caused to the entrance of the negative curvature hollow core fiber. As such, the F# of the coupling lens may preferably be within the inclusive range of -5% and 2% of $F\#_{Opt}$.

The F# of the coupling lens may be selected in at least partial dependence on properties of the laser beam (e.g. a wavelength of the laser beam) that is to be transmitted and/or a geometry of the negative curvature hollow core fiber itself. A ratio of a focal length of a coupling lens located between the laser 110 and the negative curvature hollow core fiber 120 to a diameter of an entrance pupil of the negative curvature hollow core fiber 120 may at least partially depend on the core diameter 230.

For example, when transmitting an infrared laser beam produced by a $CO_2$ laser, the ratio of a focal length of the coupling lens located between the laser 110 and the negative curvature hollow core fiber 120 to a diameter of an entrance pupil of the negative curvature hollow core fiber 120 may be about 15.4 or more. The ratio of a focal length of the coupling lens located between the laser 110 and the negative curvature hollow core fiber 120 to a diameter of an entrance pupil of the negative curvature hollow core fiber 120 may be about 17.0 or less.

A cross-sectional radius of the laser beam when entering the negative curvature hollow core fiber may be selected in at least partial dependence on properties of the laser beam (e.g. a wavelength and/or power of the laser beam) that is to be transmitted and/or a geometry of the negative curvature hollow core fiber itself. For example, for transmitting infrared light generated by a CO2 laser, and referring again to Fig. 1, a beam parameter product of the laser beam may be about 4.0 or less at the target. As yet further examples, a beam parameter product of the laser beam may be about 3.5 or less at the target. The beam parameter product of the laser beam may be about 3.5 or less at an output of the laser 110. The beam parameter product of the laser beam may be about 3.0 or less at the output of the laser 110. The laser beam at an output of the laser 110 may have a cross-sectional radius of about 0.7 mm or more. The laser beam at the output of the laser 110 may have a cross-sectional radius of about 1.3 mm or less. The laser beam at the output of the laser 110 may have a divergence of about 2.3 mrad or more. The laser beam at the output of the laser 110 may have a divergence of about 4.3 mrad or less. It will be appreciated that values merely provide an example, and that the ranges of cross-sectional radii, beam parameter products and half-angle divergences will vary depending on the planned application of the negative curvature hollow core fiber (e.g. wavelength of light to be transmitted, cross-sectional size and length of the negative curvature hollow core fiber, etc.).

The negative curvature hollow core fiber 120 may comprise silica, e.g. fused silica. Silica advantageously transmits ultraviolet radiation with relatively low radiative losses. The negative curvature hollow core fiber 120 comprises chalcogenide glass. Chalcogenide glass may be used to transmit infrared radiation and/or near infrared radiation. The chalcogenide glass may comprise one or more of the following materials: As30Se50Te20 (not suitable for near infrared transmission); As2S3; As2Se3; Ge15As25Se40Te20 (not suitable for near infrared transmission); and, As40S30Se30. The chalcogenide glass may comprise other combinations and/or dopants such as rare earth elements such as, for example, La, Tb, Tl, Ge, Sb, As, Ga. Chalcogenide glass advantageously transmits infrared radiation with relatively low radiative losses. A thickness and spacing between the capillaries may be selected to reduce radiative losses at desired wavelengths of radiation. The desired wavelengths of radiation may comprise infrared radiation produced by a $CO_2$ laser, near infrared radiation produced by a solid-state laser, e.g. comprising a Nd:YAG (neodymium doped yttrium aluminum garnet - a YAG laser) crystal or a Nd:VO$_4$ (neodymium doped yttrium orthovanadate - a vanadate laser) crystal, and/or ultraviolet radiation produced by a solid-state laser comprising a non-linear optical element, e.g. a non-linear crystal such as KTP (potassium titanyl phosphate), KTA (potassium titanyl arsenate) or BBO (beta barium borate).

An end (not shown) of the negative curvature hollow core fiber 120 may be tapered to improve a coupling efficiency of the negative curvature hollow core fiber 120 with the laser 110 and/or the marking head 130, thereby improving an efficiency of the laser marking system 100.

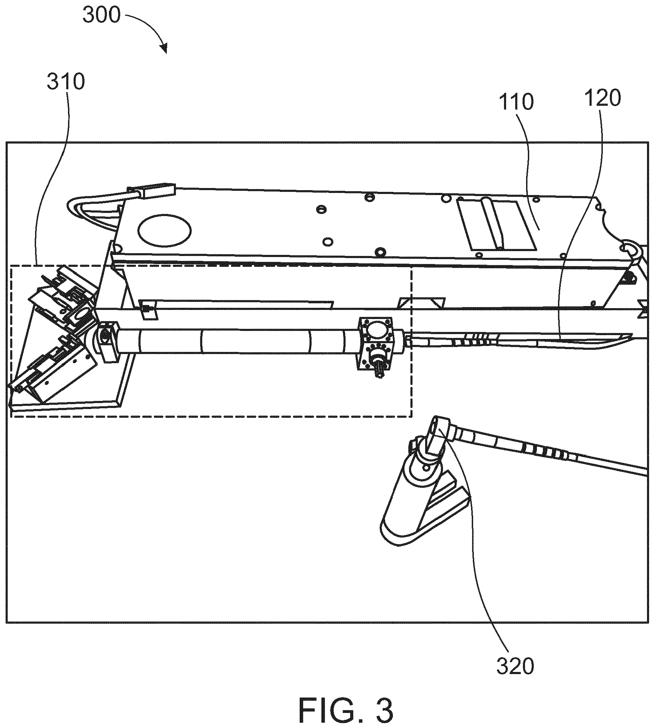

Fig. 3 shows a perspective view of portion 300 of a laser marking system according to an embodiment of the invention. The portion 300 of the laser marking system comprises a laser 110, an optical alignment system 310, a negative curvature hollow core fiber 120, and an optical coupling 320 for connecting the negative curvature hollow core fiber 120 to a marking head (not shown). The optical alignment system 310 is optically coupled to an output of a laser 110. The optical alignment system 310 is located between the laser 110 and the negative curvature hollow core fiber 120. The optical alignment system 310 is configured to change a position and/or angle of the laser beam relative to an input of the core of the negative curvature hollow core fiber 120. An end of the negative curvature hollow core fiber 120 fiber may be tapered into a lens of the optical coupling 320 for coupling into the marking head.

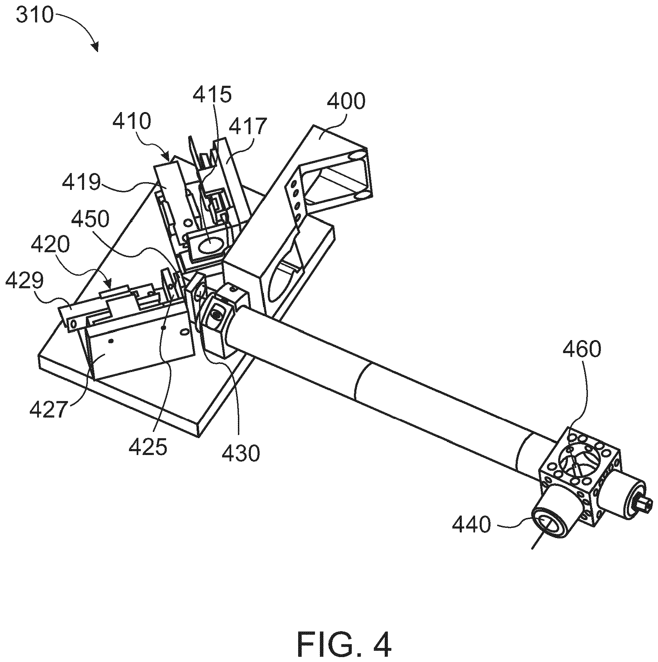

Fig. 4 schematically depicts a perspective view of some of the internal components of the optical alignment system 310 of Fig. 3. An end cap 400 of the laser is optically coupled to an input of the optical alignment system 310. The optical alignment system 310 comprises a first adjustable optical element 410 configured to receive the laser beam from the laser. The optical alignment system 310 further comprises a second adjustable optical element 420 configured to receive the laser beam from the first adjustable optical element 410 and direct the laser beam towards an input of the core of the negative curvature hollow core fiber (not shown). The optical alignment system 310 further comprises a first detector 430 configured to detect a position of the laser beam relative to the second adjustable optical element 420. The optical alignment system 310 further comprises a second detector 440 configured to detect a position of the laser beam relative to the input of the core of the negative curvature hollow core fiber. The first and second detectors 430, 440 may be configured to detect angular and/or translational positions of the laser beam relative to the second adjustable optical element 420 and the input of the core of the negative curvature hollow core fiber.

In the example of Fig. 4, the first adjustable optical element 410 comprises a first rotatable reflector 415 and the second adjustable optical element 420 comprises a second rotatable reflector 425. The two rotatable reflectors 415, 425 may each be affixed to a mount 417, 427 having adjustment means 419, 429 such as screws or motors (e.g. linear motors) configured to change a rotational position of the rotatable reflectors 415, 425. Both rotatable reflectors 415, 425 may be rotatable about a plurality of rotation axes. For example, the rotatable reflectors 415, 425 may be rotatable about first and second substantially orthogonal rotation axes such that a position of the laser beam reflected by the rotatable reflectors is adjustable in two dimensions. That is, a "tip" of a rotatable reflector about a first rotational axis may provide an "x" adjustment of the position of the laser beam and a "tilt" of the rotatable reflector about a substantially orthogonal rotational axis may provide a "y" adjustment of the position of the laser beam. The adjustment means 419 of the first rotatable reflector 415 may be configured to position the laser beam on a desired location on the surface of the second rotatable reflector 420. The adjustment means 429 of the second rotatable reflector 420 may be configured to position the laser beam such that the laser beam is substantially co-axial with a desired optical axis of the laser marking system. In this manner, any misalignment error from any source of misalignment may be compensated for by rotating the first and/or second rotatable reflectors 415, 425 of the optical alignment system 310.

In the example of Fig.4, the optical alignment system 310 comprises a first beam sampler 450 located between the first rotatable reflector 415 and the second rotatable reflector 425. The first beam sampler 450 is configured to direct a portion of the laser beam to the first detector 430. The first beam sampler 450 is preferably placed as close to the input side or the output side of the second rotatable reflector 425 as possible. The first beam sampler 450 may comprise a beam splitter, such as an optical flat having one side coated to reflect a small percentage (e.g. <1%) of the laser beam to the first detector 430. The other side of the optical flat may comprise an anti-reflection coating that allows the remaining percentage of the laser beam to transmit through the first beam sampler 450 towards the second rotatable reflector 425. The refraction of the laser beam caused by transmitting through the beam splitter may be compensated for by positioning the second rotatable reflector 420 accordingly and/or by placing a second optical flat of substantially the same thickness at a complimentary angle in the laser beam path after the first beam sampler 450.

The optical alignment system further comprises a second beam sampler 460 located between the second rotatable reflector 420 and the input of the core of the negative curvature hollow core fiber. The second beam sampler 460 is configured to direct a portion of the laser beam to the second detector 440. The second beam sampler 460 may comprise a beam splitter, such as an optical flat having one side coated to reflect a small percentage (e.g. <1%) of the laser beam to the second detector 440. The other side of the optical flat may comprise an anti-reflection coating that allows the remaining percentage of the laser beam to transmit through the second beam sampler 460 towards the input of the core of the negative curvature hollow core fiber. The refraction of the laser beam caused by transmitting through the beam splitter may be compensated for by positioning the input of the core of the negative curvature hollow core fiber accordingly and/or by placing a second optical flat of substantially the same thickness at a complimentary angle in the laser beam path after the second beam sampler 460.

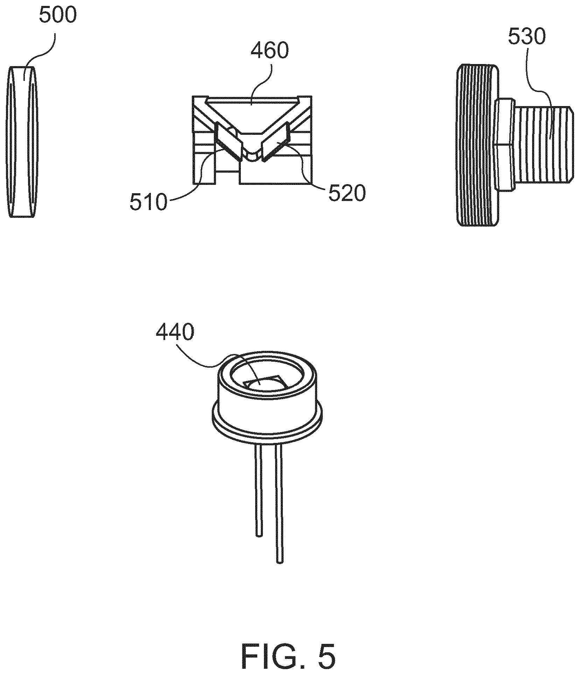

Fig. 5 schematically depicts a magnified perspective view of some of the components of the optical alignment system of Fig. 4. Fig. 5 shows the second detector 440 and the second beam sampler 460 of Fig.4 with housing tubes removed. A coupling lens 500 (that was not visible in Fig. 4 but is now visible in Fig. 5) may be provided to capture the laser beam reflected from the second rotatable reflector (not shown) and focus the laser beam towards the second beam sampler 460. The second beam sampler 460 comprises first and second optical flats 510, 520. The optical flats 510, 520 may comprise GaAs. The first optical flat 510 may be coated to direct a portion of the laser beam to the second detector 440. A remaining portion of the laser beam may transmit through the first optical flat 510 and be incident upon the second optical flat 520. The second optical flat 520 is configured to compensate for refraction effects caused by the laser beam transmitting through the first optical flat 510. That is, the laser beam transmits through the second optical flat 520 towards the input 530 of the negative curvature hollow core fiber and the second optical flat 520 refracts the laser beam to account for the refraction caused by the first optical flat 510. The second detector 440 is configured to detect an angular and/or translational position of the laser beam with respect to the input 530 of the negative curvature hollow core fiber and/or an optical axis of the laser marking system. The second detector 440 may comprise a quadrant detector configured to provide positional information of the laser beam, e.g. in the form of Cartesian coordinates.

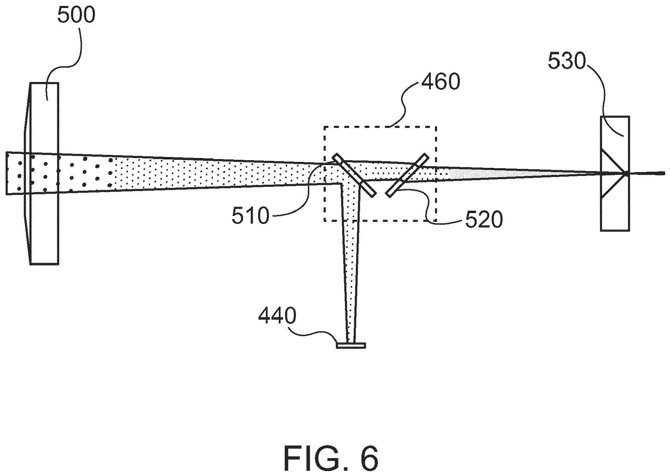

Fig. 6 schematically depicts a ray trace of a laser beam interacting with the components of Fig. 5. Radiation incident on the coupling lens 500 is captured and focused towards the second beam sampler 460. The first optical flat 510 may be coated to direct a portion of the laser beam to the second detector 440. The remaining portion of the laser beam transmits through the first optical flat 510 and is incident upon the second optical flat 520. As can be seen, a small translational offset is introduced to the portion of radiation that transmits through the first optical flat 510 due to refraction effects. The second optical flat 520 may have a thickness that is substantially equal to the first optical flat 510. The second optical flat 520 may be angled relative to the first optical fat 510 such that the translational shift of the laser beam after passing through the first optical flat 510 is substantially reversed by refractive effect of the second optical flat 520.

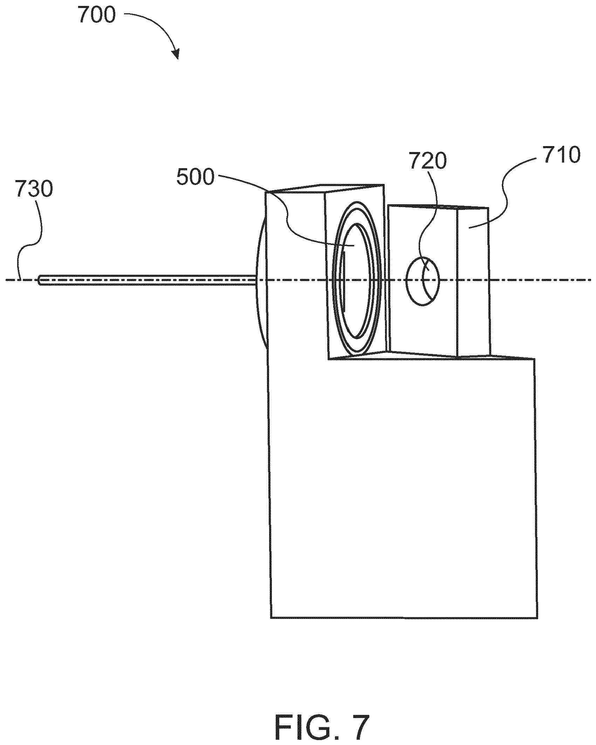

Fig. 7 schematically depicts a perspective view of an alternative beam sampler 700 of an optical alignment system according to an embodiment of the invention. Instead of using optical flats such as those used in the beam sampler of Figs. 4-6, the beam sampler 700 of Fig. 7 comprises a reflective element 710 having an alignment aperture 720 that is aligned with an optical axis 730 of the laser marking system. The alignment aperture 720 has a diameter that is substantially equal to a diameter of the laser beam (not shown). If the laser beam is aligned with the optical axis 730, then the laser beam passes through the alignment aperture 720 towards the second rotatable reflector or the negative curvature hollow core fiber. If the laser beam is not aligned with the optical axis 730, then at least some of the laser beam is reflected by the reflective element 710 towards the first or second detector (not shown). In this configuration, the signal from the first and/or second detector may be used to control the rotational position of the first and/or second rotatable reflectors to reduce the amount of the laser beam that is incident upon the first and/or second detector, thereby aligning the laser beam with the optical axis 730. Also shown in Fig. 7 is a coupling lens 500 configured to focus the laser beam onto the beam sampler 700.

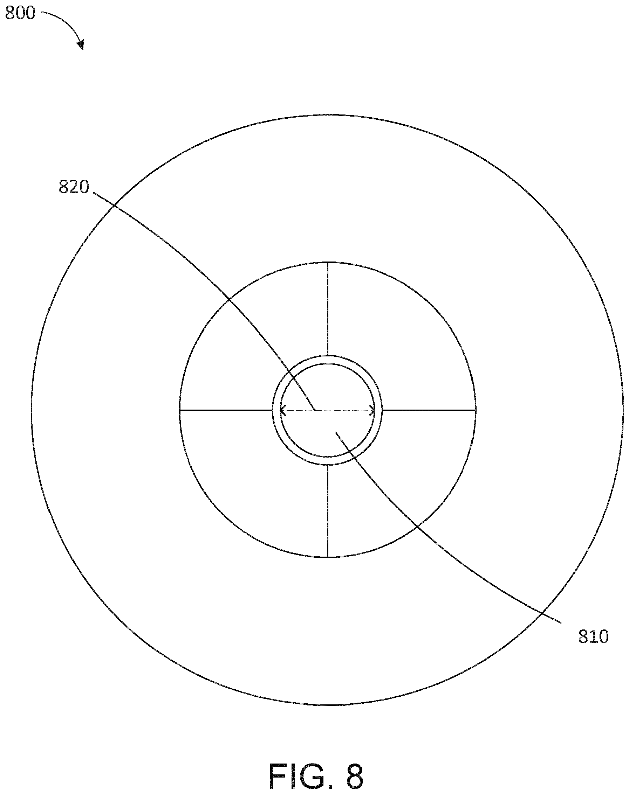

Fig. 8 schematically depicts a view from the front of a detector 800 of an optical alignment system according to an embodiment of the invention. The detector 800 may be used as the first detector and/or the second detector. The detector 800 may be located between the first rotatable reflector (not shown) and the second rotatable reflector (not shown). The detector 800 comprises an alignment aperture 810 that is aligned with an optical axis (not shown) of the laser marking system. The alignment aperture has a diameter 820 that is substantially equal to a diameter of the laser beam incident on the detector 800. In the example of Fig. 8, the detector 800 is a quadrant detector. Any unwanted deviation of the laser beam from the desired optical axis of the laser making system is detected by the quadrant detector. The detector may provide a feedback signal to a controller of the first and/or second rotatable reflector. The controller may rotate the first and/or second rotatable reflector in accordance with the detector signal and thereby reflect the laser beam such that the laser beam is aligned with the optical axis of the laser marking system.

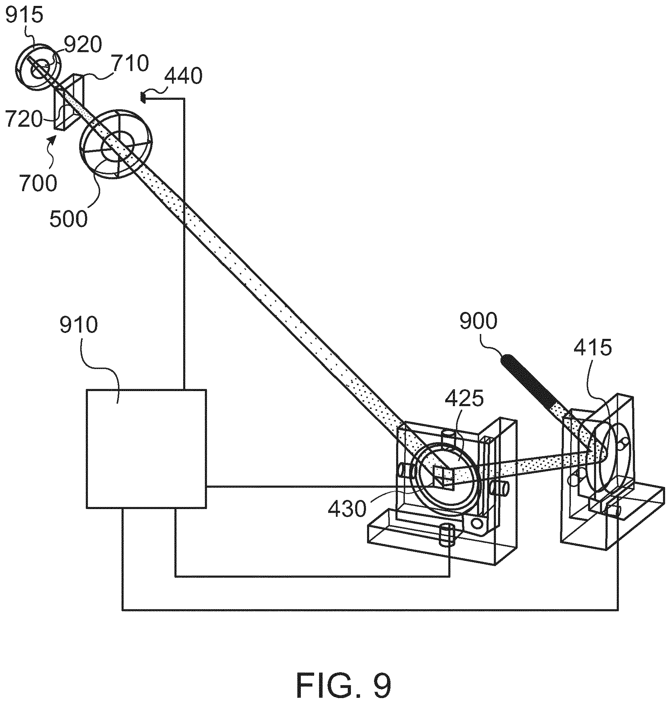

Fig. 9 schematically depicts a ray trace of an aligned laser beam 900 interacting with the components of an optical alignment system according to an embodiment of the invention. The laser beam 900 is reflected by the first rotatable reflector 415 towards the second rotatable reflector 425. In the example of Fig. 9, the first detector 430 is a quadrant detector located behind the second rotatable reflector 425. The first detector 430 is configured to detect a position and/or angle of a portion of the laser beam 900 that transmits through the second rotatable reflector 425. The second rotatable reflector 425 may have a reflectivity of between about 97% and about 99.7%. The second rotatable reflector 425 has a non-zero thickness through which a portion of the laser beam 900 transmits. The transmitted portion of the laser beam may undergo refraction when passing through the second rotatable reflector 425 and change direction, much like the translational offset of the laser beam caused by the first optical flat shown in Fig. 6. A center point of the first detector 430 may be positioned offset a center point of the second rotatable reflector 425 to account for the change in direction of the transmitted portion of the laser beam caused by refraction through the second rotatable reflector 425.

The optical alignment system further comprises a controller 910 configured to receive signals from the first and second detectors 430, 440 and use the signals to control rotational positions of the first and second rotatable reflectors 415, 425.

The portion of the laser beam 900 that does not transmit through the second rotatable reflector 425 is reflected by the second rotatable reflector 425 towards a coupling lens 500. The coupling lens 500 focuses the laser beam 900 towards a beam sampler 700. In the example of Fig. 9, the beam sampler 700 comprises a reflective element 710 having an alignment aperture 720 that is aligned with an optical axis of the laser marking system. The alignment aperture 720 has a diameter that is substantially equal to a diameter of the laser beam 900. As is the case for the beam sampler of Fig. 7, if the laser beam 900 is aligned with the optical axis of the laser marking system then the laser beam 900 passes through the alignment aperture 720 towards the input of the core of the negative curvature hollow core fiber. If the laser beam 900 is not aligned with the optical axis of the laser marking system then at least some of the laser beam is reflected by the reflective element 710 towards the second detector 440. In this configuration, the signal from the second detector 440 may be used to control the rotational position of the second rotatable reflector 425 to reduce the amount of the laser beam 900 that is incident upon the second detector 440, thereby aligning the laser beam with the optical axis of the laser marking system. In the example of Fig. 9, the laser beam 900 is aligned with the optical axis of the laser marking system and no radiation is incident on the second detector 440.

The portion of the laser beam 900 that transmits through the beam sampler 700 is incident on a first protective cap 915 comprising a first protective aperture 920. The first protective cap 915 is located proximate an input of the core of the negative curvature hollow core fiber (not shown). The laser marking system may comprise a second protective cap (not shown) comprising a second protective aperture (not shown). The second protective cap may be located proximate an output of the core of the negative curvature hollow core fiber. The first and second protective apertures 920 have a diameter that is substantially equal to a core diameter of the negative curvature hollow core fiber. The first and second protective apertures 920 are configured to protect the cladding of the negative curvature hollow core fiber from damage caused by the focused laser beam 900 and/or backscattered laser radiation that may otherwise re-enter the laser marking system. That is, radiation that is not aligned with the core of the negative curvature hollow core fiber is prevented from damaging the cladding and/or capillaries of the fiber by being blocked by the first protective cap 915. The first and/or second protective apertures 920 may each comprise a protective pin-hole having the same diameter as the core of the negative curvature hollow core fiber and may be placed at the input and output ends of the negative curvature hollow core fiber. The pin-holes may be part of the negative curvature hollow core fiber mount or a separate device. The first and/or second protective caps 915 may be replaceable and may be considered to be sacrificial devices to protect the more expensive negative curvature hollow core fiber.

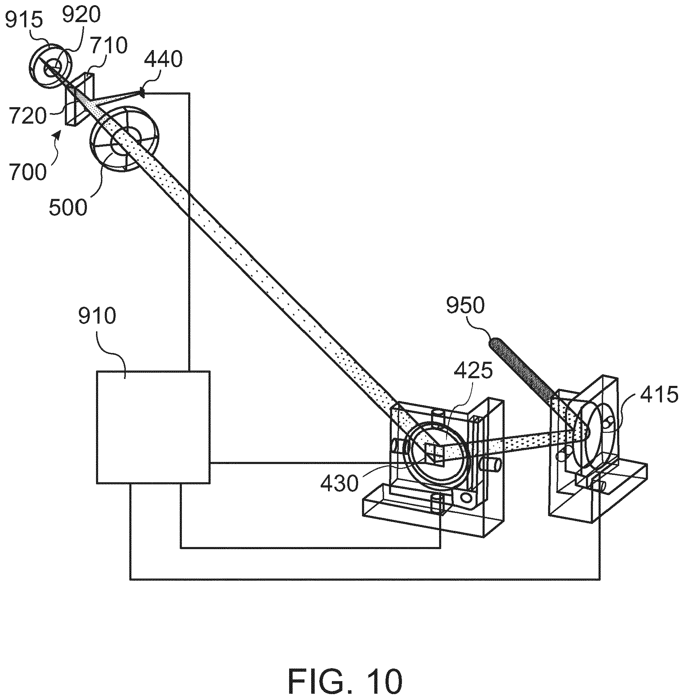

Fig. 10 schematically depicts a ray trace of a misaligned laser beam 950 interacting with the components of the optical alignment system of Fig. 9. As can be seen, a portion of the laser beam 950 is reflected by the beam sampler 700 towards the second detector 440. The second detector 440 is configured to detect the portion of the laser beam 950 and send a signal to the controller 910. The controller 910 is configured to use the signal to change the rotational position of the second rotatable reflector 425 to re-align the laser beam 950 with the optical axis of the laser marking system.

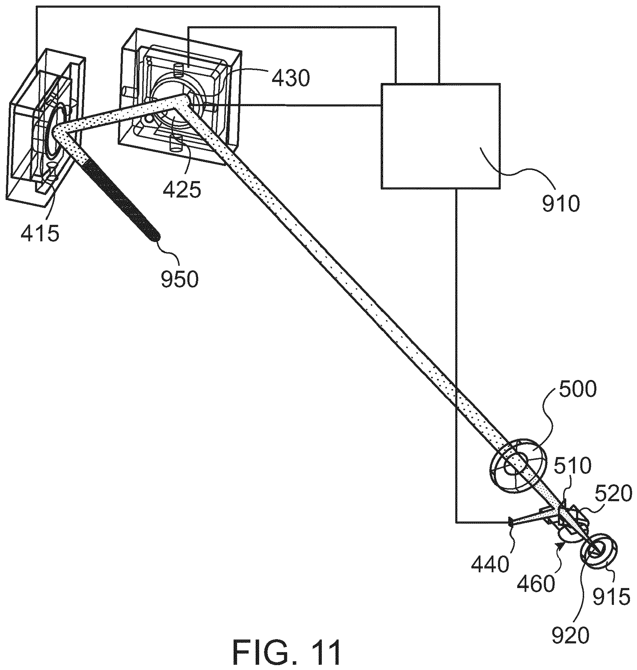

Fig. 11 schematically depicts a ray trace of a laser beam 950 interacting with the components of an alternative optical alignment system without alignment compensation according to an embodiment of the invention. The optical alignment system of Fig. 11 is the same as the optical alignment system of Figs. 9 and 10 except that the beam sampler 460 comprises first and second optical flats 510, 520 rather than a reflective element having an alignment aperture.

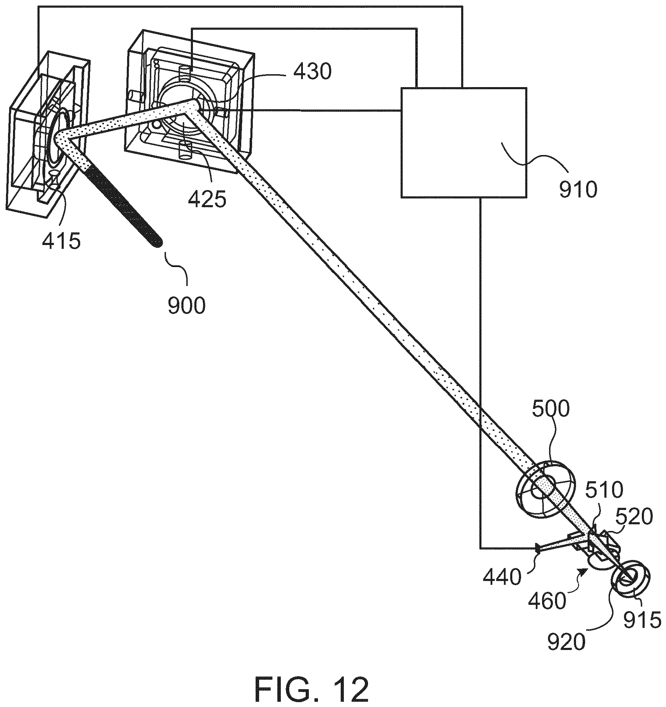

Fig. 12 schematically depicts the ray trace of Fig. 11 with alignment compensation applied by the optical alignment system. The first and second rotatable reflectors 415, 425 have been rotated by the controller 910 in at least partial dependence on the signals received from the first detector 430 and the second detector 440. The first and second rotatable reflectors 415, 425 have been rotated such that the laser beam 900 is aligned with the optical axis of the laser marking system. The compensation applied by the optical alignment system is best seen when comparing the position of the laser beam 900 on the coupling lens 500 in Figs. 11 and 12. As can be seen, the laser beam 900 is offset from the center of the coupling lens 500 in Fig. 11, and is centered on the coupling lens 500 in Fig. 12.

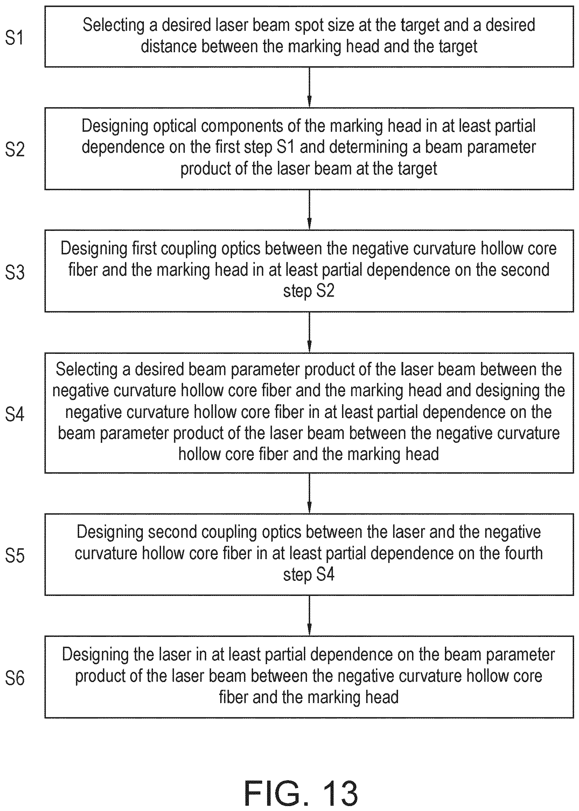

Fig. 13 shows part of a method of designing a laser marking system according to an embodiment of the invention, with all steps of the method being provided in claim 14. A first step S1 of the method includes selecting a desired laser beam spot size at the target and a desired distance between the marking head and the target. The desired laser beam spot size at the target and the desired distance between the marking head and the target may be application specific (e.g. the pattern to be marked, the material and/or shape of the target, etc.). The desired laser beam spot size may be about 100 $\mu$m or more. The desired laser beam spot size may be about 500 $\mu$m or less. The desired distance between the marking head and the target may be about 50 mm or more. The desired laser beam spot size may be about 250 $\mu$m. The desired distance between the marking head and the target may be about 250 mm or less. The desired distance between the marking head and the target may be about 125 mm.

A second step S2 of the method includes designing optical components of the marking head in at least partial dependence on the first step S1 and determining a beam parameter product of the laser beam at the target. The beam parameter product of the laser beam at the target may be defined as the product of the radius of the laser beam and the divergence of the laser beam at the target. The radius of the laser beam and the divergence of the laser beam at the target may be determined using the following equations:

$$\omega_o = \frac{2 * \lambda}{\pi} * \left( \frac{f}{D} \right)$$

$$\theta = \sin^{-1} \frac{D}{2*f}$$

where $\omega_o$ is the radius of the laser beam, f is the focal length, D is the diameter of the laser beam at a focusing lens, and $\theta$ is the half-angle divergence of the beam in mrad. The focal length of the focusing lens may be approximately the same as the distance between the marking head and the target.

A third step S3 of the method includes designing first coupling optics between the negative curvature hollow core fiber and the marking head in at least partial dependence on the second step S2. The first coupling optics may be configured to convert a divergent laser beam exiting the negative curvature hollow core fiber into a collimated laser beam entering the marking head. The first coupling optics may comprise one or more lenses of a material having a relatively high transmissivity (e.g. coated lenses for a transmissivity of about 99% or more) at the desired wavelength (e.g. infrared, near infrared or ultraviolet wavelengths). Alternatively, the first coupling optics may comprise one or more mirrors having a relatively high reflectivity (e.g. a reflectivity of about 99% or more). The lenses used in the first coupling optics may comprise one or more materials such as zinc selenide, zinc sulphide, germanium, gallium arsenide or other materials that are sufficiently transparent at infrared wavelengths (e.g. wavelengths of radiation generated by a $CO_2$ laser). For near infrared transmission, the lenses used in the first coupling optic may comprise one or materials such as fused silica, a crown glass (e.g. borosilicate or BK7) and/or a synthetic fused silica such as SUPRSIL provided by Heraeus, a German company. For ultraviolet transmission, the lenses used in the first coupling optic may comprise, for example, ultraviolet grade fused silica. A geometry of the lenses (e.g. a diameter and curvature of the lens surfaces) used in the first coupling optics may at least partially depend on the diameter and/or divergence of the laser beam at the target and/or the optical components of the marking head with which the laser beam interacts before reaching the target.

A fourth step S4 of the method includes selecting a desired beam parameter product of the laser beam between the negative curvature hollow core fiber and the marking head and designing the negative curvature hollow core fiber in at least partial dependence on the beam parameter product of the laser beam between the negative curvature hollow core fiber and the marking head. Designing the laser marking system such that the beam parameter product at the target is greater than the beam parameter product between the negative curvature hollow core fiber and the marking head may reduce radiative losses and/or improve a performance and efficiency of the laser marking system.

The relevant design parameters for designing the negative curvature hollow core fiber may comprise the following:

the materials of the negative curvature hollow core fiber;
the wavelength at which the negative curvature hollow core fiber losses are to be reduced;
the number of rings of capillary fibers making up the cladding;
the number of capillary fibers making up each ring;
the ratio of the inner and outer diameters of the capillary fibers;
the shape of the capillary fibers;
the distance between the capillary fibers in each ring;
the core diameter of the negative curvature hollow core fiber;
the inner and outer diameters of the cladding;
the length of the taper at the end(s) of the negative curvature hollow core fiber; and/or,
the ratio of the diameter of the negative curvature hollow core fiber at the beginning and end of the taper(s).

A fifth step S5 of the method includes designing second coupling optics between the laser and the negative curvature hollow core fiber in at least partial dependence on the fourth step S4. The relevant design parameters for designing the second coupling optics may be the same the relevant design parameters for the output coupling optics as described for the third step S3. An additional constraint may be that the minimal coupling loss occurs when the laser beam spot size between the laser and the negative curvature hollow core fiber conforms to the following equation:

$$\frac{2 * \omega_o}{d} \cong 0.64$$

where $\omega_o$ is the radius of the laser beam between the laser and the negative curvature hollow core fiber and d is the diameter of the core of the negative curvature hollow core fiber.

A sixth step S6 of the method includes designing the laser in at least partial dependence on the beam parameter product of the laser beam between the negative curvature hollow core fiber and the marking head. The relevant design parameters for coupling the laser to the negative curvature hollow core fiber may comprise the diameter of the laser beam output by the laser and/or the divergence of the laser beam output by the laser. The beam parameter product of the laser (i.e. the product of the laser beam radius and the laser beam divergence) may be less than that of all the following components of the laser marking system. For example, the beam parameter product of the laser may be about 3.5 or less to reduce radiative losses through the laser marking system.

The method may further comprise a seventh step (not shown) including using forward and/or backward iteration to adjust the laser marking system. Forward and/or backward iteration may involve considering factors such as the tolerances of the components of the laser marking system, the availability of materials, costs, and performance variances, and determining suitable compromises between these factors. If the design of the laser marking system begins with the marking head and progresses through the negative curvature hollow core fiber back to the laser, then if constraints on the laser design prevent meeting the desired design goal, it may be necessary to reverse the design process with the new constrained laser design. This process may be iterated to achieve an improved performance with the modified design parameters.

The optical components of the laser marking system (e.g. first and second coupling optics and/or the optical components of the marking head), like any fabricated part, are manufactured within design tolerances. In general, the tighter the tolerance, the costlier the component. A typical optical component may be made to standard manufacturing tolerances on design parameters such as centration, diameter, surface quality, flatness, parallelism, etc. In most laser marking applications, the standard tolerances are sufficient and no further compensation is required. The same is true for the mechanical components holding the optical components in the system. Parts can be machined to very tight tolerance at a cost. However, in the case of trying to couple a laser beam having a 200 μm spot size into a 300 μm diameter core of a negative curvature hollow core fiber, the stack-up of tolerance errors may become a problem. These are errors that may negatively affect coupling efficiency and may not be directly related to the laser marking process except with regards to a reduction in radiative power delivered to the target. The impact of such errors may be reduced by "hard" and "soft" alignment techniques.

Hard alignment techniques comprise processes and tools used during the manufacturing process to ensure satisfaction of system specifications. For example, a laser in a typical marking system is mounted on a base plate that has position adjusting screws. The laser and the base plate are put on a specially designed tooling to permit adjustment of the screws to position the laser beam from the output of the laser to a particular point on a reference target. In this way, when the laser is put in a laser marking system and attached to a marking head, the laser beam is automatically aligned to the optics in the marking head and no further adjustment is required. Likewise, a lens may be positioned in its mount using set-screws and tooling to compensate for centration errors. These are all means of compensation that are done during the manufacturing process and are fixed in place when completed.

Soft alignment comprises techniques that may be implemented "off-line" by service personnel, customers, or controlled dynamically. This may include using the optical alignment system (e.g. the first and second rotatable reflectors) to adjust a position and/or angle of the laser beam. The first rotatable reflector may keep the laser beam positioned on a desired point (the point where the design optical axis intersects a surface of the second rotatable reflector) on the second rotatable reflector. The second rotatable reflector may adjust a position and/or angle of the laser beam to keep the laser beam aligned with the optical axis of the laser marking system. In this way, the two rotatable reflectors compensate for tolerance errors of all optical components of the laser marking system upstream of the first and second rotatable reflectors.

For example, thermal movement due to expansion and contraction of materials and vibration due to internal cooling devices and external sources such as other equipment may cause unwanted movement of the optical components that have not been compensated for by the hard and soft alignment techniques. Hard alignment techniques may be used to compensate, such as mounting optical components using vibration isolation materials, expansion coefficients of materials used may be matched with one another, etc. Soft alignment techniques may be used to compensate, such as controlling the optical alignment system (e.g. the first and second rotatable reflectors) using motor driven adjustment screws on the rotatable reflectors and feedback from the first and/or second detectors.

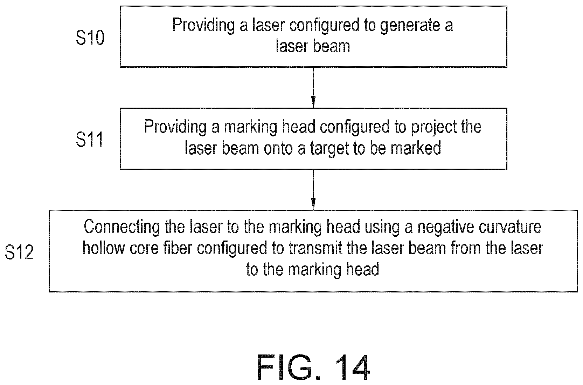

Fig. 14 shows a method of manufacturing a laser marking system according to an embodiment of the invention. A first step S10 of the method includes providing a laser configured to generate a laser beam. A second step S11 of the method includes providing a marking head configured to project the laser beam onto a target to be marked. A third step S12 of the method includes connecting the laser to the marking head using a negative curvature hollow core fiber configured to transmit the laser beam from the laser to the marking head.

Having thus described several aspects of at least one implementation, it is to be appreciated various alterations, modifications, and improvements will readily occur to those skilled in the art. Such alterations, modifications, and improvements are intended to be part of this disclosure, and are intended to be within the scope of the disclosure. The acts of methods disclosed herein may be performed in alternate orders than illustrated, and one or more acts may be omitted, substituted, or added. One or more features of any one example disclosed herein may be combined with or substituted for one or more features of any other example disclosed. Accordingly, the foregoing description and drawings are by way of example only. The present invention is defined by the appended claims.

The phraseology and terminology used herein is for the purpose of description and should not be regarded as limiting. As used herein, the term "plurality" refers to two or more items or components. As used herein, dimensions which are described as being "substantially" similar may be considered to be within about 25% of one another. The terms "comprising," "including," "carrying," "having," "containing," and "involving," whether in the written description or the claims and the like, are openended terms, i.e., to mean "including but not limited to." Thus, the use of such terms is meant to encompass the items listed thereafter, and equivalents thereof, as well as additional items. Only the transitional phrases "consisting of" and "consisting essentially of," are closed or semi-closed transitional phrases, respectively, with respect to the claims. Use of ordinal terms such as "first," "second," "third," and the like in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

The laser marking system may include various types of optical components, such as refractive, reflective, magnetic, electromagnetic, electrostatic, and/or other types of optical components, or any combination thereof, for directing, shaping, and/or controlling electromagnetic radiation.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

**Claims**

1. A laser marking system (100) comprising:

    a laser (110) configured to produce a laser beam; and,
    a marking head (130) configured to project the laser beam onto a target,
    **characterised in that** the laser marking system (100) comprises a negative curvature hollow core fiber (120) configured to transmit the laser beam from the laser (110) to the marking head (130), wherein the negative curvature hollow core fiber (120) comprises chalcogenide glass.

2. The laser marking system (100) of claim 1, wherein the laser beam comprises infrared electromagnetic radiation.

3. The laser marking system (100) of any preceding claim, comprising an umbilical (140) between the laser (110) and the marking head (130), wherein the negative curvature hollow core fiber (120) is located within the umbilical (140),

and optionally
wherein the umbilical (140) has a length of about 3 metres or more.

4. The laser marking system (100) of any preceding claim, wherein an end of the negative curvature hollow core fiber (120) is tapered.

5. The laser marking system (100) of any preceding claim, comprising a coupling lens for optically coupling the negative curvature hollow core fiber (120) to another optical component, wherein a ratio of a focal length to a diameter of an entrance pupil of the coupling lens is selected in at least partial dependence on the following equation:

$$F\# = 0.16\pi \frac{D_{core}}{\lambda}$$

where F# is the ratio of a focal length to a diameter of an entrance pupil of the coupling lens, $D_{core}$ is a core diameter (230) of the negative curvature hollow core fiber (120), and $\lambda$ is a wavelength of the laser beam,

and optionally
wherein the ratio of the focal length to the diameter of the entrance pupil of the coupling lens is selected to be within the range from about -5% to about +2% of the calculated value of F#.

6. The laser marking system (100) of any preceding claim, wherein a beam parameter product of the laser beam is in the inclusive range from about 1.0 mm mrad to about 40.0 mm mrad at the target, and/or

wherein a beam parameter product of the laser beam is in the inclusive range from about 0.2 mm mrad to about 10.0 mm mrad at an output of the laser (110), and/or
wherein the laser beam has a cross-sectional radius of between about 0.2 mm and about 4.0 mm,

and/or
wherein the laser beam has a full-angle beam divergence of between about 2.0 mrad and about 8.0 mrad.

7. The laser marking system of any preceding claim, comprising an optical alignment system located between the laser and the negative curvature hollow core fiber configured to change a position and/or angle of the laser beam relative to a core of the negative curvature hollow core fiber,

and optionally
wherein the optical alignment system comprises:

a first adjustable optical element configured to receive the laser beam from the laser;
a second adjustable optical element configured to receive the laser beam from the first adjustable optical element and direct the laser beam towards an input of the core of the negative curvature hollow core fiber;
a first detector configured to detect a position of the laser beam relative to the second adjustable optical element; and,
a second detector configured to detect a position of the laser beam relative to the input of the core of the negative curvature hollow core fiber.

8. The laser marking system (100) of any preceding claim, comprising a first protective aperture (920) located between the laser (110) and the negative curvature hollow core fiber (120) at an input of the core (215) of the negative curvature hollow core fiber (120), wherein the first protective aperture (920) has a diameter that is substantially equal to a core diameter (230) of the negative curvature hollow core fiber (120).

9. The laser marking system of claim 2 or any claim dependent thereon, wherein a hollow core of the negative curvature hollow core fiber has a core diameter within the inclusive range of about 200 $\mu$m to about 500 $\mu$m,
and/or
wherein the negative curvature hollow core fiber comprises a plurality of capillaries and wherein thicknesses of walls of the capillaries are within the inclusive range of about 0.3 $\mu$m to about 15 $\mu$m.

10. The laser marking system (100) of any preceding claim, wherein the laser beam comprises near infrared radiation,

and optionally
wherein the negative curvature hollow core fiber (120) comprises silica.

**11.** The laser marking system (100) of claim 10, wherein a hollow core (215) of the negative curvature hollow core fiber (120) has a core diameter (230) within the inclusive range of about 20 μm to about 100 μm, and/or

wherein the negative curvature hollow core fiber (120) comprises a plurality of capillaries (220) and wherein thicknesses of walls of the capillaries (220) are within the inclusive range of about 0.3 μm to about 3 μm.

**12.** The laser marking system (100) of any preceding claim, comprising a second protective aperture located between the marking head (130) and the negative curvature hollow core fiber (120) at an output of the core of the negative curvature hollow core fiber (120), wherein the second protective aperture has a diameter that is substantially equal to a core diameter (230) of the negative curvature hollow core fiber (120).

**13.** A method of marking a target with a laser beam comprising using the laser marking system (100) of any preceding claim, wherein the method comprises:

using the laser to produce the laser beam;
using the negative curvature hollow core fiber to transmit the laser beam from the laser to the marking head; and,
using the marking head to project the laser beam onto the target for its marking.

**14.** A method of designing the laser marking system (100) of any of claims 1 to 12 comprising:

(a) selecting a desired laser beam spot size at the target and a desired distance between the marking head (130) and the target;
(b) designing optical components of the marking head (130) in at least partial dependence on step (a) and determining a beam parameter product of the laser beam at the target;
(c) designing first coupling optics between the negative curvature hollow core fiber (120) and the marking head (130) in at least partial dependence on step (b);
(d) selecting a desired beam parameter product of the laser beam between the negative curvature hollow core fiber (120) and the marking head (130) and designing the negative curvature hollow core fiber (120) in at least partial dependence on the beam parameter product of the laser beam between the negative curvature hollow core fiber (120) and the marking head (130);
(e) designing second coupling optics between the laser (110) and the negative curvature hollow core fiber (120) in at least partial dependence on step (d);
(f) designing the laser (110) in at least partial dependence on the beam parameter product of the laser beam between the negative curvature hollow core fiber (120) and the marking head (130); and,
(g) providing the laser marking system designed in accordance with the foregoing steps,
and optionally
further comprising using forward and/or backward iteration to adjust the laser marking system (100) before achieving its manufacture.

**15.** A method of manufacturing a laser marking system (100) comprising:

providing a laser (110) configured to generate a laser beam; and,
providing a marking head (130) configured to project the laser beam onto a target to be marked,
**characterised in that** the method comprises connecting the laser (110) to the marking head (130) using a negative curvature hollow core fiber (120) configured to transmit the laser beam from the laser (110) to the marking head (130), wherein the negative curvature hollow core fiber (120) comprises chalcogenide glass.

**Patentansprüche**

**1.** Laser-Markiersystem (100), Folgendes umfassend:

einen Laser (110), der dafür konfiguriert ist, einen Laserstrahl zu produzieren; und
einen Markierkopf (130), der dafür konfiguriert ist, den Laserstrahl auf ein Ziel zu projizieren,
**dadurch gekennzeichnet, dass** das Laser-Markiersystem (100) eine Faser mit Hohlkern von negativer Krümmung (120) umfasst, die dafür konfiguriert ist, den Laserstrahl vom Laser (110) zum Markierkopf (130) zu übertragen, wobei die Faser mit Hohlkern von negativer Krümmung (120) Chalkogenid-Glas umfasst.

**2.** Laser-Markiersystem (100) nach Anspruch 1, wobei der Laserstrahl infrarote elektromagnetische Strahlung umfasst.

**3.** Laser-Markiersystem (100) nach einem der vorhergehenden Ansprüche, umfassend ein Versorgungskabel (140) zwischen dem Laser (110) und dem Markierkopf (130), wobei sich die Faser mit Hohlkern von negativer Krümmung (120) innerhalb des Versorgungskabels (140) befindet,

und optional

wobei das Versorgungskabel (140) eine Länge von etwa 3 Metern oder mehr aufweist.

4. Laser-Markiersystem (100) nach einem der vorhergehenden Ansprüche, wobei ein Ende der Faser mit Hohlkern von negativer Krümmung (120) verjüngt ist.

5. Laser-Markiersystem (100) nach einem der vorhergehenden Ansprüche, umfassend eine Koppellinse zum optischen Koppeln der Faser mit Hohlkern von negativer Krümmung (120) mit einer anderen optischen Komponente, wobei ein Verhältnis einer Brennweite zu einem Durchmesser einer Eintrittspupille der Koppellinse in mindestens teilweiser Abhängigkeit von der folgenden Gleichung gewählt wird:

$$F\# = 0{,}16\pi\frac{D_{Kern}}{\lambda}$$

worin F# das Verhältnis einer Brennweite zu einem Durchmesser einer Eintrittspupille der Koppellinse ist, $D_{Kern}$ ein Kerndurchmesser (230) der Faser mit Hohlkern von negativer Krümmung (120) ist, und $\lambda$ eine Wellenlänge des Laserstrahls ist,
und optional
wobei das Verhältnis der Brennweite zum Durchmesser der Eintrittspupille der Koppellinse so ausgewählt ist, dass es innerhalb des Bereichs von etwa -5 % bis etwa +2 % des berechneten Wertes von F# liegt.

6. Laser-Markiersystem (100) nach einem der vorhergehenden Ansprüche, wobei ein Strahlparameterprodukt des Laserstrahls am Ziel in dem einschließenden Bereich von etwa 1,0 mm mrad bis etwa 40,0 mm mrad liegt,
und/oder

wobei ein Strahlparameterprodukt des Laserstrahls an einem Ausgang des Lasers (110) in dem einschließenden Bereich von etwa 0,2 mm mrad bis etwa 10,0 mm mrad liegt,
und/oder
wobei der Laserstrahl einen Querschnittsradius zwischen etwa 0,2 mm und etwa 4,0 mm aufweist,
und/oder
wobei der Laserstrahl eine Vollwinkel-Strahldivergenz zwischen etwa 2,0 mrad und etwa 8,0 mrad aufweist.

7. Laser-Markiersystem nach einem der vorhergehenden Ansprüche, ein optisches Ausrichtungssystem umfassend, das sich zwischen dem Laser und der Faser mit Hohlkern von negativer Krümmung befindet und dafür konfiguriert ist, eine Position und/oder einen Winkel des Laserstrahls relativ zu einem Kern der Faser mit Hohlkern von negativer Krümmung zu ändern,

und optional
wobei das optische Ausrichtungssystem Folgendes umfasst:

ein erstes einstellbares optisches Element, das dafür konfiguriert ist, den Laserstrahl vom Laser zu empfangen;
ein zweites einstellbares optisches Element, das dafür konfiguriert ist, den Laserstrahl vom ersten einstellbaren optischen Element zu empfangen und den Laserstrahl in Richtung von einem Eingang des Kerns der Faser mit Hohlkern von negativer Krümmung zu richten;
einen ersten Detektor, der dafür konfiguriert ist, eine Position des Laserstrahls relativ zu dem zweiten einstellbaren optischen Element zu ermitteln; und
einen zweiten Detektor, der dafür konfiguriert ist, eine Position des Laserstrahls relativ zu dem Eingang des Kerns der Faser mit Hohlkern von negativer Krümmung zu ermitteln.

8. Laser-Markiersystem (100) nach einem der vorhergehenden Ansprüche, eine erste Schutzblende (920) umfassend, die sich zwischen dem Laser (110) und der Faser mit Hohlkern von negativer Krümmung (120) an einem Eingang des Kerns (215) der Faser mit Hohlkern von negativer Krümmung (120) befindet, wobei die erste Schutzblende (920) einen Durchmesser aufweist, der im Wesentlichen gleich einem Kerndurchmesser (230) der Faser mit Hohlkern von negativer Krümmung (120) ist.

9. Laser-Markiersystem nach Anspruch 2 oder einem davon abhängigen Anspruch, wobei ein Hohlkern der Faser mit Hohlkern von negativer Krümmung einen Kerndurchmesser innerhalb des einschließenden Bereichs von etwa 200 $\mu$m bis etwa 500 $\mu$m aufweist,
und/oder
wobei die Faser mit Hohlkern von negativer Krümmung eine Vielzahl von Kapillaren umfasst und wobei Wanddicken der Kapillaren innerhalb des einschließenden Bereichs von etwa 0,3 $\mu$m bis etwa 15 $\mu$m liegen.

10. Laser-Markiersystem (100) nach einem der vorhergehenden Ansprüche, wobei der Laserstrahl Nahinfrarotstrahlung umfasst,

und optional

wobei die Faser mit Hohlkern von negativer Krümmung (120) Siliziumdioxid umfasst.

11. Laser-Markiersystem (100) nach Anspruch 10, wobei ein Hohlkern (215) der Faser mit Hohlkern von negativer Krümmung (120) einen Kerndurchmesser (230) innerhalb des einschließenden Bereichs von etwa 20 μm bis etwa 100 μm aufweist, und/oder

wobei die Faser mit Hohlkern von negativer Krümmung (120) eine Vielzahl von Kapillaren (220) umfasst und wobei Wanddicken der Kapillaren (220) innerhalb des einschließenden Bereichs von etwa 0,3 μm bis etwa 3 μm liegen.

12. Laser-Markiersystem (100) nach einem der vorhergehenden Ansprüche, eine zweite Schutzblende umfassend, die sich zwischen dem Markierkopf (130) und der Faser mit Hohlkern von negativer Krümmung (120) an einem Ausgang des Kerns der Faser mit Hohlkern von negativer Krümmung (120) befindet, wobei die zweite Schutzblende einen Durchmesser aufweist, der im Wesentlichen gleich einem Kerndurchmesser (230) der Faser mit Hohlkern von negativer Krümmung (120) ist.

13. Verfahren zum Markieren eines Ziels mit einem Laserstrahl, das Verwenden des Laser-Markiersystems (100) nach einem der vorhergehenden Ansprüche umfassend, wobei das Verfahren Folgendes umfasst:

Verwenden des Lasers, um den Laserstrahl zu produzieren;
Verwenden der Faser mit Hohlkern von negativer Krümmung, um den Laserstrahl vom Laser zum Markierkopf zu übertragen, und
Verwenden des Markierkopfes, um den Laserstrahl auf das Ziel für dessen Markierung zu projizieren.

14. Verfahren zum Entwerfen des Laser-Markiersystems (100) nach einem der Ansprüche 1 bis 12, Folgendes umfassend:

(a) Auswählen einer erwünschten Laserstrahl-Fleckgröße an dem Ziel und einer erwünschten Entfernung zwischen dem Markierkopf (130) und dem Ziel;
(b) Entwerfen optischer Komponenten des Markierkopfs (130) in mindestens teilweiser Abhängigkeit von Schritt (a) und Bestimmen eines Strahlparameterprodukts des Laserstrahls an dem Ziel;
(c) Entwerfen einer ersten Koppeloptik zwischen der Faser mit Hohlkern von negativer Krümmung (120) und dem Markierkopf (130) in mindestens teilweiser Abhängigkeit von Schritt (b);
(d) Auswählen eines erwünschten Strahlparameterprodukts des Laserstrahls zwischen der Faser mit Hohlkern von negativer Krümmung (120) und dem Markierkopf (130) und Entwerfen der Faser mit Hohlkern von negativer Krümmung (120) in mindestens teilweiser Abhängigkeit vom Strahlparameterprodukt des Laserstrahls zwischen der Faser mit Hohlkern von negativer Krümmung (120) und dem Markierkopf (130);
(e) Entwerfen einer zweiten Koppeloptik zwischen dem Laser (110) und der Faser mit Hohlkern von negativer Krümmung (120) in mindestens teilweiser Abhängigkeit von Schritt (d);
(f) Entwerfen des Lasers (110) in mindestens teilweiser Abhängigkeit vom Strahlparameterprodukt des Laserstrahls zwischen der Faser mit Hohlkern von negativer Krümmung (120) und dem Markierkopf (130); und
(g) Bereitstellen des gemäß den vorstehenden Schritten entworfenen Laser-Markiersystems, und optional

ferner umfassend das Verwenden von Vorwärts- und/oder Rückwärts-Iteration, um das Laser-Markiersystems (100) einzustellen, bevor seine Herstellung verwirklicht wird.

15. Verfahren zum Herstellen eines Laser-Markiersystems (100), Folgendes umfassend:

Bereitstellen eines Lasers (110), der dafür konfiguriert ist, einen Laserstrahl zu erzeugen; und
Bereitstellen eines Markierkopfes (130), der dafür konfiguriert ist, den Laserstrahl auf ein zu markierendes Ziel zu projizieren,
**dadurch gekennzeichnet, dass** das Verfahren das Verbinden des Lasers (110) mit dem Markierkopf (130) unter Verwendung einer Faser mit Hohlkern von negativer Krümmung (120) umfasst, die dafür konfiguriert ist, den Laserstrahl vom Laser (110) zum Markierkopf (130) zu übertragen, wobei die Faser mit Hohlkern von negativer Krümmung (120) Chalkogenid-Glas umfasst.

**Revendications**

1. Système de marquage laser (100) comprenant :

un laser (110) configuré pour produire un faisceau laser ; et
une tête de marquage (130) configurée pour projeter le faisceau laser sur une cible,
**caractérisé en ce que** le système de marquage laser (100) comprend une fibre à coeur creux à courbure négative (120) configurée pour transmettre le faisceau laser du laser (110) à la tête de marquage (130), dans lequel la fibre à coeur creux à courbure négative (120) comprend du verre de chalcogénure.

2. Système de marquage laser (100) selon la revendication 1, dans lequel le faisceau laser comprend un rayonnement électromagnétique infrarouge.

3. Système de marquage laser (100) selon l'une quelconque des revendications précédentes, comprenant un ombilical (140) entre le laser (110) et la tête de marquage (130), dans lequel la fibre à coeur creux à courbure négative (120) est située à l'intérieur de l'ombilical (140),

   et facultativement
   dans lequel l'ombilical (140) a une longueur d'environ 3 mètres ou plus.

4. Système de marquage laser (100) selon l'une quelconque des revendications précédentes, dans lequel une extrémité de la fibre à coeur creux à courbure négative (120) est effilée.

5. Système de marquage laser (100) selon l'une quelconque des revendications précédentes, comprenant une lentille de couplage pour coupler optiquement la fibre à coeur creux à courbure négative (120) à un autre composant optique, dans lequel un rapport d'une distance focale à un diamètre d'une pupille d'entrée de la lentille de couplage est choisi en fonction, au moins en partie, de l'équation suivante :

$$F\# = 0{,}16\pi \frac{D_{c\oe ur}}{\lambda}$$

   où F# est le rapport d'une distance focale à un diamètre d'une pupille d'entrée de la lentille de couplage, $D_{c\oe ur}$ est un diamètre de coeur (230) de la fibre à coeur creux à courbure négative (120), et $\lambda$ est une longueur d'onde du faisceau laser,
   et facultativement
   dans lequel le rapport de la distance focale au diamètre de la pupille d'entrée de la lentille de couplage est choisi pour se situer dans la plage d'environ -5 % à environ +2 % de la valeur calculée de F#.

6. Système de marquage laser (100) selon l'une quelconque des revendications précédentes, dans lequel un produit de paramètres de faisceau du faisceau laser se situe dans la plage inclusive d'environ 1,0 mm mrad à environ 40,0 mm mrad, au niveau de la cible,

et/ou

   dans lequel un produit de paramètres de faisceau du faisceau laser se situe dans la plage inclusive d'environ 0,2 mm mrad à environ 10,0 mm mrad, au niveau d'une sortie du laser (110), et/ou
   dans lequel le faisceau laser a un rayon de section transversale compris entre environ 0,2 mm et environ 4,0 mm,
   et/ou
   dans lequel le faisceau laser présente une divergence de faisceau plein angle comprise entre environ 2,0 mrad et environ 8,0 mrad.

7. Système de marquage laser selon l'une quelconque des revendications précédentes, comprenant un système d'alignement optique situé entre le laser et la fibre à coeur creux à courbure négative et configuré pour faire changer une position et/ou un angle du faisceau laser par rapport à un coeur de la fibre à coeur creux à courbure négative,

   et facultativement
   dans lequel le système d'alignement optique comprend :

      un premier élément optique réglable configuré pour recevoir le faisceau laser du laser ;
      un deuxième élément optique réglable configuré pour recevoir le faisceau laser du premier élément optique réglable et pour diriger le faisceau laser vers une entrée du coeur de la fibre à coeur creux à courbure négative ;
      un premier détecteur configuré pour détecter une position du faisceau laser par rapport au deuxième élément optique réglable ; et
      un deuxième détecteur configuré pour détecter une position du faisceau laser par rapport à l'entrée du coeur de la fibre à coeur creux à courbure négative.

8. Système de marquage laser (100) selon l'une quelconque des revendications précédentes, comprenant une première ouverture de protection (920) située entre le laser (110) et la fibre à coeur creux à courbure négative (120) à une entrée du coeur (215) de la fibre à coeur creux à courbure négative (120), dans lequel la première ouverture de protection (920) a un diamètre qui est sensiblement égal à un diamètre de coeur (230) de la fibre à coeur creux à courbure négative (120).

9. Système de marquage laser selon la revendication 2 ou l'une quelconque des revendications qui en dépendent, dans lequel un coeur creux de la fibre à coeur creux à courbure négative a un diamètre compris dans la plage inclusive allant d'environ 200 μm à environ 500 μm,
et/ou
dans lequel la fibre à coeur creux à courbure négative comprend une pluralité de capillaires et dans lequel des épaisseurs de parois des capillaires sont comprises dans la plage inclusive d'environ 0,3 μm à environ 15 μm.

10. Système de marquage laser (100) selon l'une quelconque des revendications précédentes, dans lequel le faisceau laser comprend un rayonnement proche infrarouge,

et facultativement
dans lequel la fibre à coeur creux à courbure négative (120) comprend de la silice.

11. Système de marquage laser (100) selon la revendication 10, dans lequel un coeur creux (215) de la fibre à coeur creux à courbure négative (120) a un diamètre de coeur (230) compris dans la plage inclusive comprise d'environ 20 μm à environ 100 μm, et/ou
dans lequel la fibre à coeur creux à courbure négative (120) comprend une pluralité de capillaires (220) et dans lequel des épaisseurs de parois des capillaires (220) sont comprises dans la plage inclusive d'environ 0,3 μm à environ 3 μm.

12. Système de marquage laser (100) selon l'une quelconque des revendications précédentes, comprenant une deuxième ouverture de protection située entre la tête de marquage (130) et la fibre à coeur creux à courbure négative (120) à une sortie du coeur de la fibre à coeur creux à courbure négative (120), dans lequel la deuxième ouverture de protection a un diamètre qui est sensiblement égal à un diamètre de coeur (230) de la fibre à coeur creux à courbure négative (120).

13. Procédé de marquage d'une cible avec un faisceau laser comprenant l'utilisation du système de marquage laser (100) selon l'une quelconque des revendications précédentes, dans lequel le procédé comprend :

l'utilisation du laser pour produire le faisceau laser ;
l'utilisation de la fibre à coeur creux à courbure négative pour transmettre le faisceau laser du laser à la tête de marquage ; et
l'utilisation de la tête de marquage pour projeter le faisceau laser sur la cible pour son marquage.

14. Procédé de conception du système de marquage laser (100) selon l'une quelconque des revendications 1 à 12, comprenant :

(a) la sélection d'une taille de spot de faisceau laser souhaitée au niveau de la cible et d'une distance souhaitée entre la tête de marquage (130) et la cible ;
(b) la conception de composants optiques de la tête de marquage (130) en fonction, au moins en partie, de l'étape (a), et la détermination d'un produit de paramètres de faisceau du faisceau laser au niveau de la cible ;
(c) la conception d'une première optique de couplage entre la fibre à coeur creux à courbure négative (120) et la tête de marquage (130) en fonction, au moins en partie, de l'étape (b) ;
(d) la sélection d'un produit de paramètres de faisceau souhaité du faisceau laser entre la fibre à coeur creux à courbure négative (120) et la tête de marquage (130) et la conception de la fibre à coeur creux à courbure négative (120) en fonction, au moins en partie, du produit de paramètres de faisceau du faisceau laser entre la fibre à coeur creux à courbure négative (120) et la tête de marquage (130) ;
(e) la conception d'une deuxième optique de couplage entre le laser (110) et la fibre à coeur creux à courbure négative (120) en fonction, au moins en partie, de l'étape (d) ;
(f) la conception du laser (110) en fonction, au moins en partie, du produit de paramètres de faisceau du faisceau laser entre la fibre à coeur creux à courbure négative (120) et la tête de marquage (130) ; et
(g) la fourniture du système de marquage laser conçu conformément aux étapes précédentes, et facultativement
comprenant en outre l'utilisation d'une itération avant et/ou arrière pour ajuster le système de marquage laser (100) avant d'achever sa fabrication.

15. Procédé de fabrication d'un système de marquage laser (100) comprenant :

la fourniture d'un laser (110) configuré pour générer un faisceau laser, et
la fourniture d'une tête de marquage (130) configurée pour projeter le faisceau laser sur une cible à marquer,
**caractérisé en ce que** le procédé comprend la liaison du laser (110) à la tête de marquage (130) à l'aide d'une fibre à coeur creux à courbure négative (120) configurée pour transmettre le faisceau laser du laser (110) à la tête de marquage (130), dans lequel la fibre à coeur creux à courbure négative (120) comprend du verre de chalcogénure.

100

130

120

110

140

# FIG. 1

FIG. 2

300

310

110    120

320

FIG. 3

EP 4 100 196 B1

FIG. 4

28

500

460

530

510        520

440

FIG. 5

FIG. 6

FIG. 7

800

820

810

# FIG. 8

FIG. 9

FIG. 10

FIG. 11

FIG. 12

S1 | Selecting a desired laser beam spot size at the target and a desired distance between the marking head and the target

S2 | Designing optical components of the marking head in at least partial dependence on the first step S1 and determining a beam parameter product of the laser beam at the target

S3 | Designing first coupling optics between the negative curvature hollow core fiber and the marking head in at least partial dependence on the second step S2

S4 | Selecting a desired beam parameter product of the laser beam between the negative curvature hollow core fiber and the marking head and designing the negative curvature hollow core fiber in at least partial dependence on the beam parameter product of the laser beam between the negative curvature hollow core fiber and the marking head

S5 | Designing second coupling optics between the laser and the negative curvature hollow core fiber in at least partial dependence on the fourth step S4

S6 | Designing the laser in at least partial dependence on the beam parameter product of the laser beam between the negative curvature hollow core fiber and the marking head

# FIG. 13

S10 | Providing a laser configured to generate a laser beam

S11 | Providing a marking head configured to project the laser beam onto a target to be marked

S12 | Connecting the laser to the marking head using a negative curvature hollow core fiber configured to transmit the laser beam from the laser to the marking head

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019101887 A